# EUROPEAN PATENT SPECIFICATION

(11) **EP 2 545 122 B1**
(45) Date of publication and mention of the grant of the patent: **30.12.2015**
(21) Application number: 11708203.2
(22) Date of filing: 11.03.2011
(51) Int. Cl.: C08L 27/18, C08L 51/04, C08L 55/02, C09K 21/12, C08L 69/00, C08K 5/523, C08L 51/08

(54) **IMPACT MODIFIED IGNITION RESISTANT CARBONATE POLYMER COMPOSITION**
ELASTIFIZIERTE FLAMMFESTE CARBONATPOLYMERZUSAMMENSETZUNGEN
COMPOSITION POLYMÈRE DE TYPE CARBONATE RÉSISTANT À L'INFLAMMATION ET AYANT UNE RÉSISTANCE AUX CHOCS MODIFIÉE

(30) Priority: 11.03.2010 US 312698 P
(43) Date of publication of application: 16.01.2013
(73) Proprietor: Trinseo Europe GmbH, 8810 Horgen (CH)
(72) Inventor: VAN NUFFEL, Claude T. E., 9041 Oostakker (BE); LAKEMAN, Pascal E.R.E.J., 4624 JH Bergen Op Zoom (NL)
(74) Representative: Hoffmann Eitle
(86) International application number: PCT/EP2011/001221
(87) International publication number: WO 2011/110365

(56) References cited:
- WO-A1-2010/072351
- DE-A1-102006 012 990
- US-A1- 2004 059 031
- US-B1- 6 403 683

## Description

### FIELD OF THE INVENTION

The present invention relates to an impact modified ignition resistant carbonate polymer composition demonstrating improved flammability performance, impact resistance and hydrolytic stability. Said composition comprises a polycarbonate (PC); a mass polymerized non-silicon-containing graft (co)polymer, preferably a mass polymerized acrylonitrile, butadiene, and styrene terpolymer (mABS); a silicon-containing graft copolymer, preferably a silicon-containing graft (co)polymer having a core-shell morphology, including a grafted shell that contains polymerized alkyl(meth)acrylate and a composite rubber core that contains polyorganosiloxane and poly(meth)alkyl acrylate components; an oligomeric aromatic phosphorous compound, and an anti drip agent comprising a polytetrafluoroethylene polymer, a fluorothermoplast, or mixture thereof. The present invention further relates to a method to make said impact modified ignition resistant carbonate polymer composition and fabricated articles formed therefrom.

### BACKGROUND OF THE INVENTION

For many years, carbonate polymer compositions have enjoyed widespread success in applications such as electronic equipment, appliance, and tool enclosures and components. In addition to providing an attractive housing for such articles, these enclosures also provide durability and protection for products which may be subjected to rugged environments and/or are expensive to replace. In recent years, one of the challenges facing the continued use of carbonate polymer compositions in such applications is the requirement for greater toughness.

Several factors have contributed to the need for improved impact properties. For instance, portability (a result of miniaturization) of products like cell phones, mp3 players, notepad and notebook computes has resulted in broader and more diverse uses. However, as portability has increased so has the opportunity for dropping the products, generally subjecting them to greater physical abuses, as well as using them in more rugged/less safe environments. Moreover, as these articles have become smaller, the thicknesses of their enclosures have become thinner further compromising their ability to resist impact.

For applications at the other end of the size spectrum, wall thicknesses of enclosures for large articles (such as a 60 inch flat screen TVs) have decreased for reasons of weight, material, and cost reduction. Thinner walled enclosures and heavier loads spread over longer distances have also compromised impact resistance, which is especially critical for such large and expensive articles, during shipping, handling, and installation. Portability, thin walling, wider use, more rugged environments, and heavier loads have all contributed to a need for carbonate polymer compositions with improved toughness.

One of the key requirements for an enclosure of an electronic device is, in the event that its electronics fail and catch on fire, that it contains the fire so that the fire can not spread. If the enclosure catches fire and subsequently begins to drip, and the drips are flaming drips, the fire can easily spread and endanger both life and property. Enclosures for electrical applications typically need to meet flammability requirements from one or more regulatory agency, such as Underwriter's Laboratories. An example is Underwriter's Laboratories Standard 94 (UL 94) which characterizes a material's ease of ignition, and once ignited, its burning characteristics, i.e., is the material self extinguishing, how long does it burn, does it drip and if it drips, are they flaming drips.

Carbonate polymer compositions are not inherently ignition resistant. A variety of techniques have been disclosed which help to meet industry requirements by imparting ignition resistance and lowering the ease in which a carbonate polymer composition catches on fire. Notably, non-halogen phosphorus flame retardant additives have been employed in carbonate polymer compositions to improve ignition resistance. Moreover, carbonate compositions, being thermoplastic, are predisposed to softening and dripping when heated. To minimize dripping, a drip suppressant such as polytetrafluoroethane (PTFE) is employed. Ignition resistant carbonate polymer compositions are well known, for example see USP 5,061,745; 6,596,794; 6,727,301; 6,753,366; and Re 36,188.

However, the key challenge in providing a useful ignition resistant carbonate polymer composition is providing the ignition resistance required to meet agency and/or end use requirements and standards while maintaining an acceptable balance of properties: physical, mechanical, processing, thermal, aesthetic and in particularly hydrolytic stability. This balance is extremely difficult to achieve because the ignition resistant additive(s) and/or technique(s) which impart the desired ignition resistant performance always negatively affect one or more of the carbonate polymer composition properties, notably toughness and impact resistance.

Carbonate polymer compositions are particularly susceptible to notched sensitivity and the addition of particulate and/or immiscible flame retardant additives adversely affects the impact properties. A well known approach to improving notch sensitivity (resulting from the addition of flame retardant(s)) in polycarbonates is by the addition of an impact modifier. However, impact modifiers which are rubbery materials, tend to be more flammable than the carbonate polymer they modify. So, adding an impact modifier to compensate for the presence of flame retardants requires higher levels of flame retardants to compensate for the increased flammability introduced by the impact modifier.

Example 9 of EP-A-2 382 269, prior art pursuant to Article 54(3) EPC only, discloses a flame-protected impact strength modified polycarbonate as an Example which comprises 75.3 parts of a polycarbonate based on bisphenol A, 6.05 parts of m-ABS, 12.6 parts of a bisphenol A-based olgiphosphate, 0.4 parts of PTFE, and 6.05 parts of a graft polymer made of 11 wt.% of methyl methacrylate on 89 wt.% of a composite rubber made of 92% of silicone and 8% of acrylate, together with the additives pentaerythritol tetrastearate and Irganox B900.

US-A-2004/0059031 discloses a thermoplastic moulding composition having good flame resistance, melt flowability, resistance to chemicals and creep. Its compositions comprise an aromatic polycarbonate or polyestercarbonate, an ABS graft polymer produced by mass polymerisation, an olgimeric phosphate, optionally a bisphenol A derivative, a fluorinated olefin, a rubber-containing graft having a core-shell morphology including a grafting acrylate based shell, and further conventional additives.

It would be desirable to have an impact modified ignition resistant carbonate polymer composition demonstrating good hydrolytic stability wherein the impact modifier improves toughness and/or impact resistance while not adversely affecting the ignition resistant performance of the carbonate polymer composition.

### SUMMARY OF THE INVENTION

The present invention is such an ignition resistant carbonate polymer composition. The ignition resistant carbonate polymer composition of the present invention comprises:
(i) an aromatic polycarbonate or an aromatic polyester carbonate, (ii) a non-silicon-containing graft (co)polymer produced by mass polymerization, (iii) a silicon-containing graft (co)polymer having a core-shell morphology, including a grafted shell that contains polymerized alkyl(meth)acrylate and a composite rubber core that contains polyorganosiloxane and poly(meth)alkyl acrylate components, wherein said core comprises at least 20 percent by weight silicon based on the total weight of the silicon-containing graft (co)polymer, (iv) an oligomeric aromatic phosphorous compound represented by the formula I: 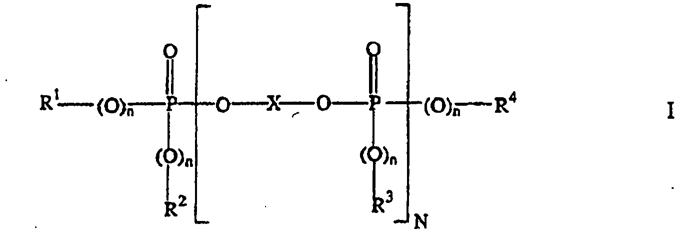 wherein, R¹, R², R³ and R⁴ independently of one another each denote optionally halogenated C₁- to C₈-alkyl, or C₅- to C₆- cycloalkyl, C₆- to C₂₀- aryl or C₇- to C₁₂- aralkyl, in each case optionally substituted by alkyl and/or halogen, X denotes a mono- or polynuclear aromatic radical having 6 to 30 C atoms, n independently of one another is 0 or 1, N represents values greater than 0 and less than 30, (v) a mixture of a polytetrafluoroethylene polymer and a fluorothermoplast, and (vi) one or more of a thermoplastic vinyl (co)polymer, an impact modifier, a filler, a reinforcing material, a stabilizer, a pigment, a dye, a mold release agent, a lubricant, or an anti-static agent.

In another embodiment, component (i) in the hereinabove composition is present in an amount from 30 to 75 parts by weight based on the total weight of the ignition resistant carbonate polymer composition.

In another embodiment, component (ii) in the hereinabove composition is present in an amount from 5 to 60 parts by weight based on the total weight of the ignition resistant carbonate polymer composition and preferably comprises (ii.a) from 5 to 99 percent by weight of a grafting (co)polymer comprising one or more vinyl monomers on (ii.b) from 95 to 1 percent by weight of one or more a grafting backbone having a glass transition temperature (T_{g}) of less than 10°C, wherein percents by weight are based on the total weight of component (ii) the graft (co)polymer.

In another embodiment, component (iii) in the hereinabove composition is present in an amount from 0.5 to 10 parts by weight based on the total weight of the ignition resistant carbonate polymer composition.

In another embodiment, component (iv) in the hereinabove composition is present in an amount from 2 to 20 parts by weight based on the total weight of the ignition resistant carbonate polymer composition.

In another embodiment, in component (iv) in the hereinabove composition X is derived from a diol selected from diphenylphenol, bisphenol A, resorcinol or hydroquinone.

In another embodiment, component (v) in the hereinabove composition the mixture of a polytetrafluoroethylene polymer and a fluorothermoplast is present in an amount of from 0.01 to 5 parts by weight based on the total weight of the ignition resistant carbonate polymer composition.

In another embodiment, component (v) is a mixture of fibril forming polytetrafluoroethylene polymer and fluorothermoplast present in an amount of from 0.1 to 3 parts by weight based on the total weight of the ignition resistant carbonate polymer composition.

In another embodiment, component (v) in the hereinabove composition the fluorothermoplast comprises a polymer of interpolymerized units derived from tetrafluoroethylene (TFE) and hexafluoropropylene (HFP), a polymer of interpolymerized units derived from TFE, HFP and vinylidenefluoride (VDF), a polymer of interpolymerized units derived from TFE, HFP and a monomer represented by formula VI, or a polymer derived from interpolymerized units derived from TFE and a monomer represented by formula VI: R⁸₂C=CR⁸₂ wherein each of R⁸ is independently selected from H, Cl, or an alkyl group of from 1 to 8 carbon atoms, a cyclic alkyl group of from 0.5 to 10 carbon atoms, or an aryl group of from 1 to 8 carbon atoms.

In another embodiment, component (v) in the hereinabove composition the fluorothermoplast comprises a terpolymer having interpolymerized units derived from tetrafluoroethylene (TFE), hexafluoropropylene (HFP) and vinylidenefluoride (VDF).

In another embodiment, the present invention is a method to make the hereinabove composition comprising the steps of melt-compounding components (i), (ii), (iii), (iv), (v) and (vi).

In another embodiment, the present invention is a formed article comprising the hereinabove composition, preferably the formed article is an interior trim for rail vehicles, an interior and/or exterior automotive article, an enclosure for electrical devices containing small transformers, an enclosure for information dissemination and/or transmission device, an enclosure and/or cladding for medical purposes, a message device and/or enclosures therefore, a toy vehicles for children, a sheet wall element, an enclosure for safety equipment, a hatchback spoiler, a thermally insulated transport container, an apparatus for keeping and/or caring for small animals, an article for sanitary and/or bathroom installations, a cover grill for ventilation openings, an article for summer houses and sheds, and/or enclosures for garden appliances. Preferred fabricated articles include an instrument housing or enclosure such as for: a power tool, an appliance, a consumer electronic equipment such as a TV, a VCR, a DVD player, a web appliance, an electronic book, etc., or an enclosure for: information technology equipment such as a telephone, a computer, a monitor, a fax machine, a battery charger, a scanner, a copier, a printer, a hand held computer, a flat screen display, and the like.

### DETAILED DESCRIPTION OF THE INVENTION

Component (i) of the present invention is a thermoplastic aromatic polycarbonate and/or aromatic polyester carbonate. Suitable aromatic polycarbonates and/or aromatic polyester carbonates according to the invention are known from the literature or can be produced by methods known from the literature (for example, for the production of aromatic polycarbonates, see Schnell, "Chemistry and Physics of Polycarbonates", Interscience Publishers, 1964, as well as USP 3,028,365; 4,529,791; and 4,677,162; which are hereby incorporated by reference in their entirety. Suitable aromatic polyester carbonates are described in USP 3,169,121; 4,156,069; and 4,260,731; which are hereby incorporated by reference in their entirety.

The production of aromatic polycarbonates is effected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols.

Diphenols for the production of the aromatic polycarbonates and/or aromatic polyester carbonates are preferably those of formula II 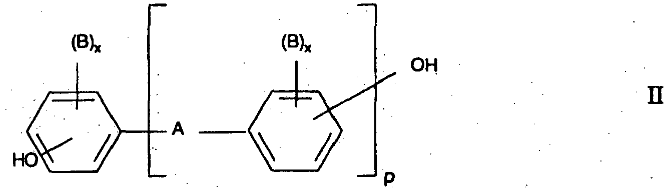 wherein A denotes a single bond, a C₁ - C₅ alkylene, a C₂ - C₅ alkylidene, a C₅ - C₆ cycloalkylidene, -O-, -SO-, -CO-, -S-, -SO₂-, or a C₆ - C₁₂ arylene, on to which other aromatic rings, which optionally contain hetero atoms, can be condensed, or a radical of formula III or IV 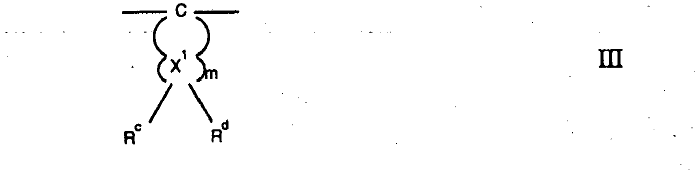 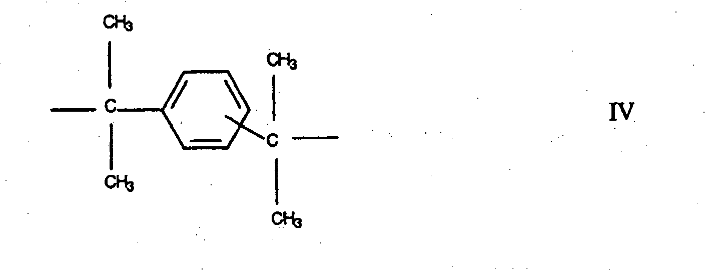
- B: in each case is independently hydrogen, a C₁ - C₁₂ alkyl, preferably methyl, or a halogen, preferably chlorine and/or bromine;
- x: in each case is mutually independently 0, 1, or 2;
- p: is 0 or 1;
- R^{c} and R^{d}: are mutually independent of each other and are individually selectable for each X¹ and are hydrogen or a C₁ - C₆ alkyl, preferably hydrogen, methyl or ethyl;
- X¹: denotes carbon; and
- m: denotes an integer from 4 to 7, preferably 4 or 5, with the proviso that R^{c} and R^{d} simultaneously denotes an alkyl on at least one X₁ atom.

The preferred diphenols are hydroquinone, resorcinol, dihydroxybiphenyls, bis(hydroxyphenyl)-C₁ - C₅ alkanes, bis(hydroxyphenyl)-C₅ -C₆ cycloalkanes, bis(hydroxyphenyl)ethers, bis(hydroxyphenyl)sulfoxides, bis(hydroxyphenyl)ketones, bis(hydroxyphenyl)sulfones and α,α'-bis(hydroxyphenyl)diisopropylbenzenes, as well as derivatives thereof which have brominated and/or chlorinated nuclei.

Diphenols which are particularly preferred are 4,4'-dihydroxybiphenyl, bisphenol A, 2,4-bis(4-hydroxyphenyl)-2-methylbutane, 1,1-bis(4-hydroxyphenyl)-cyclohexane, 1,1-bis(4-hydroxyphenyl)-3,3,5-trimethylcyclohexane, 4,4-dihydroxydiphenyl sulfide and 4,4-dihydroxydiphenyl sulfone, as well as di- and tetrabrominated or chlorinated derivatives thereof, such as 2,2-bis(3-chloro-4-hydroxyphenyl)propane, 2,2-bis-(3,5-dichloro-4-hydroxyphenyl)propane or 2,2-bis(3,5-dibromo-4-hydroxyphenyl)propane. 2, 2-bis-(4-hydroxyphenyl)propane (bisphenol A) is particularly preferred. The diphenols can be used individually or as arbitrary mixtures. The diphenols are known from the literature or can be obtained by methods known from the literature.

Examples of suitable chain terminators for the production of the aromatic polycarbonates include phenol, p-chlorophenol, p-tert-butylphenol or 2,4,6-tribromophenol, as well as long chain alkylphenols such as 4-(1,3-dimethyl-butyl)-phenol or monoalkylphenols or dialkylphenols which contain a total of 8 to 20 C atoms in their alkyl substituents, such as 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol. The amount of chain terminators used is generally between 0.1 mole percent and 10 mole percent with respect to the molar sum of the diphenols used in each case.

The aromatic polycarbonates and/or aromatic polyester carbonates of the present invention preferably have a mean weight average molecular weights of from about 10,000 to about 200,000 preferably about 20,000 to about 80,000. Unless otherwise indicated, the references to aromatic polycarbonate and/or aromatic polyester carbonate "molecular weight" herein refer to weight average molecular weights (Mw) determined by gel permeation chromatography (GPC) using laser scattering techniques with a bisphenol A polycarbonate standard and is given in units of grams per mole (g/mole).

The aromatic polycarbonates can be branched in the known manner, for example by the incorporation of 0.05 to 2.0 mole percent, with respect to the sum of the diphenols used, of trifunctional compounds or of compounds with a functionality higher than three, for example those which contain three or more phenolic groups. Branched polycarbonates suitable for the present invention can be prepared by known techniques, for example several suitable methods are disclosed in USP 3,028,365; 4,529,791; and 4,677,162; which are hereby incorporated by reference in their entirety.

Suitable branching agents that may be used are tri- or multi-functional carboxylic acid chlorides, such as trimesic acid trichloride, cyanuric acid trichloride, 3,3'-,4,4'-benzophenonetetracarboxylic acid tetrachloride, 1,4,5,8-naphthalene-tetracarboxylic acid tetrachloride or pyromellitic acid tetrachloride for example, in amounts of 0.01 to 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris(4-hydroxyphenyl)heptane, 1,3,5-tris(4-hydroxyphenyl)benzene, 1,1,1-tris(4-hydroxyphenyl)ethane, tris(4-hydroxyphenyl)-phenyl-methane, 2,2-bis[4,4-bis(4-hydroxyphenyl)cyclohexyl]-propane, 2,4-bis[1-(4-hydroxyphenyl)-1-methylethyl]phenol, tetrakis(4-hydroxyphenyl)-methane, 2,6-bis(2-hydroxy-5-methyl-benzyl)-4-methyl-phenol, 2-(4-hydroxyphenyl)-2-(2,4-dihydroxyphenyl)propane, or tetrakis(4-[1-(4-hydroxyphenyl)-1-methylethyl]-phenoxy)-methane in amounts of 0.01 to 1.0 mole percent with respect to the diphenols used. Phenolic branching agents can be placed in the reaction vessel with the diphenols. Acid chloride branching agents can be introduced together with the acid chlorides.

Both homopolycarbonates and copolycarbonates are suitable. For the production of copolycarbonates according to component (i) in accordance with the invention, 1 to 25 parts by weight, preferably 2.5 to 25 parts by weight (with respect to the total amount of diphenols to be used) of polydiorganosiloxanes comprising hydroxy-aryloxy terminal groups can also be used. These are known (see, for example, USP 3,419,634) or can be produced by methods known from the literature.

Apart from bisphenol A homopolycarbonates, the preferred polycarbonates are the copolycarbonates of bisphenol A with up to 15 mole percent, with respect to the molar sums of the diphenols, of other diphenols which are cited as preferred or particularly preferred, in particular 2,2-bis(3,5-dibromo-4-hydroxyphenyl)-propane.

The preferred aromatic dicarboxylic acid dihalides for the production of the aromatic polyester carbonates are the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio between 1:20 and 20:1 are particularly preferred. A carbonic acid halide, preferably phosgene, is used in conjunction as a difunctional acid derivative during the production of the polyester carbonates.

Apart from the aforementioned monophenols, suitable chain terminators for the production of the aromatic polyester carbonates include chlorocarboxylic acid esters thereof, as well as the acid chlorides of aromatic monocarboxylic acids which may optionally be substituted by C₁ - C₂₂ alkyl groups, or by halogen atoms, and also include aliphatic C₂ - C₂₂ monocarboxylic acid chlorides. The amount of chain terminator is 0.0.5 to 10 mole percent in each case, with respect to the moles of diphenols in the case of phenolic chain terminators and with respect to the moles of dicarboxylic acid dichlorides in the case of monocarboxylic acid chloride chain terminators.

The aromatic polyester carbonates may also contain incorporated hydroxycarboxylic acids. The aromatic polyester carbonates may be either linear or may be branched. Suitable branching agents are disclosed hereinabove.

The proportion of carbonate structural units in the aromatic polyester carbonates can be arbitrarily varied. The content of carbonate groups is preferably up to 100 mole percent, particularly up to 80 mole percent, most preferably up to 50 mole percent, with respect to the sum of ester groups and carbonate groups. Both the ester and the carbonate fraction of the aromatic polyester carbonates can be present in the form of blocks, or can be randomly distributed in the condensation polymer.

The relative solution viscosity (ηᵣₑₗ) of the aromatic polycarbonates and aromatic polyester carbonates is within the range of 1.18 to 1.4, preferably 1.22 to 1.3 (as measured on solutions of 0.5 g of polycarbonate and polyester carbonate, respectively, in 100 mL of methylene chloride at 25°C).

The aromatic polycarbonates and aromatic polyester carbonates can be used individually or in any mixture with each other.

The thermoplastic aromatic polycarbonates and/or aromatic polyester carbonates (i) are present in an amount equal to or greater than about 30 parts by weight, preferably equal to or greater than about 35 parts by weight, preferably equal to or greater than about 40 parts by weight, and more preferably equal to or greater than about 45 parts by weight based on the total weight of the ignition resistant carbonate polymer composition. The thermoplastic aromatic polycarbonates and/or aromatic polyester carbonates (i) are present in an amount equal to or less than about 75 parts by weight, preferably equal to or greater than about 70 parts by weight, more preferably equal to or greater than about 65 parts by weight, more preferably equal to or greater than about 60 parts by weight, and more preferably equal to or less than about 55 parts by weight based on the weight of the ignition resistant carbonate polymer composition. Unless stated otherwise, parts by weight are based on the total weight of the ignition resistant carbonate polymer composition.

Component (ii) of the present invention is a non-silicon-containing graft (co)polymer, preferably one or more grafting (co)polymer (ii.a) comprising one or more vinyl monomer grafted on one or more grafting backbone (ii.b), said grafting backbone having a glass transition temperature less than 10°C, preferably less than 0°C, preferably less than about -10°C, and more preferably less than -20°C. The grafting backbone (ii.b) generally has an average particle size (D_{v,} value) of from 0.01 to 7 microns. The grafting (co)polymer (ii.a) is present in an amount of from 5 to 99, preferably 30 to 80 percent by weight and the grafting backbone (ii.b) is present in an amount of from 95 to 1, preferably from 70 to 20 percent by weight, weight percents are based on the total weight of the graft (co)polymer (ii).

Preferably, the grafting copolymer (ii.a) comprises monomers which are preferably mixtures (ii.a.1) of 50 to 99 parts by weight of aromatic vinyl compounds and/or aromatic vinyl compounds with substituted nuclei (such as styrene, α-methylstyrene, p-methylstyrene or p-chlorostyrene) and/or butylacrylate, ethylacrylate, or ethylhexylacrylate and/or C, - C₄ alkyl esters of (meth)acrylic acid (such as methyl methacrylate or ethyl methacrylate), and (ii.a.2) 1 to 50 parts by weight of vinyl cyanides (unsaturated nitriles, such as acrylonitrile and methacrylonitrile) and/or C₁ - C₄ alkyl esters of (meth)acrylic acid (such as methyl methacrylate, n-butyl acrylate and t-butyl acrylate) and/or derivatives (such as anhydrides and imides) of unsaturated carboxylic acids (for example maleic anhydride and N-phenylmaleimide).

The preferred monomers (ii.a.1) are selected from at least one of the monomers styrene, α-methylstyrene and methyl methacrylate. The preferred monomers (ii.a.2) are selected from at least one of the monomers acrylonitrile, maleic anhydride and methyl methacrylate. The monomers which are particularly preferred are styrene as (ii.a.1) and acrylonitrile as (ii.a.2).

Examples of suitable grafting backbones (ii.b) for graft (co)polymers (ii) include diene rubbers, ethylene/propylene and optionally diene (EP(D)M) rubbers, acrylate, polyurethane, chloroprene and ethylene/vinyl acetate rubbers.

The preferred grafting backbones (ii.b) are diene rubbers (for example based on butadiene, isoprene, etc.) or mixtures of diene rubbers or copolymers of diene rubbers or mixtures thereof with other copolymerizable monomers (for example according to (ii.a.1) and (ii.a.2)), providing that the glass transition temperature is less than about 10°C, preferably less than about 0°C, preferably less than about -10°C, and more preferably less than about -20°C. Pure polybutadiene rubber is particularly preferred. A particularly preferred graft (co)polymer (ii) is acrylonitrile, butadiene, and styrene terpolymer (ABS).

Graft (co)polymers (ii) are produced by radical polymerization, for example by emulsion, mass, suspension, solution or bulk polymerization. For examples of the mass, bulk, mass-solution (sometimes referred to as solution), or mass-suspension (sometimes referred to as suspension) polymerization, which are generally known as mass polymerization processes, see USP 3,660,535; 3,243,481; and 4,239,863; which are incorporated herein by reference. Suitable ABS polymers may be produced by redox initiation with an initiator system comprising an organic hydroperoxide and ascorbic acid according to USP 4,937,285; which is incorporated herein by reference.

To achieve the desired balance of end properties (for example impact strength, processability, and hydrolytic stability) for the ignition resistant carbonate polymer composition of the present invention we found that using a mass polymerized non-silicon-containing graft (co)polymer is most preferred. A mixture of mass and emulsion polymerized non-silicon-containing graft (co)polymer is less preferred, but may still result in an acceptable overall balance of properties. However, we have found that for the ignition resistant carbonate polymer compositions of the present invention, the use of emulsion polymerized non-silicon-containing graft (co)polymer will not achieve an acceptable balance of properties, especially in regards to hydrolytic stability.

Suitable acrylate rubbers according to (ii.b) of graft (co)polymer (ii) are preferably polymers of acrylic acid alkyl esters, optionally with up to 40 percent by weight, with respect to (ii.b), of other polymerizable, ethylenically unsaturated monomers. The preferred polymerizable acrylic acid esters include C₁ - C₈ alkyl esters, for example methyl, ethyl, butyl, n-octyl and 2-ethylhexyl esters: halogenoalkyl esters, preferably halogeno-C₁- C₈ - alkyl esters such as chloroethyl acrylate, as well as mixtures of these monomers.

Monomers with more than one polymerizable double bond can be copolymerized to provide cross-linking. The preferred examples of cross-linking monomers are the esters of unsaturated monocarboxylic acids containing 3 to 8 C atoms and unsaturated monohydric alcohols containing 3 to 12 C atoms, or saturated polyols containing 2 to 4 OH groups and 2 to 20 C atoms, such as ethylene glycol dimethacrylate or allyl methacrylate for example; multiply-unsaturated heterocyclic compounds, such as trivinyl and triallyl cyanurate for example; polyfunctional vinyl compounds such as di- and trivinylbenzenes; and also triallyl phosphate and diallyl phthalate.

The preferred cross-linking monomers are allyl methacrylate, ethylene glycol dimethacrylate, diallyl phthalate and heterocyclic compounds which contain at least 3 ethylenically unsaturated groups. Cross-linking monomers which are particularly preferred are the cyclic monomers triallyl cyanurate, triallyl isocyanurate, triacryloyl hexahydro-s-triazine and triallylbenzenes. The amount of cross-linked monomer is preferably 0.02 to 5, particularly 0.05 to 2 percent by weight, with respect to grafting backbone (ii.b). For cyclic cross-linking monomers containing at least 3 ethylenically unsaturated groups, it is advantageous to restrict the amount thereof to less than 1 percent by weight of graft base (ii.b).

Examples of preferred "other" polymerizable, ethylenically unsaturated monomers which can optionally be employed apart from acrylic acid esters for the production of graft base (ii.b) include acrylonitrile, styrene, α-methylstyrene, acrylamides, vinyl-C₁ - C₆-alkyl ethers, methyl methacrylate and butadiene. The acrylate rubbers which are preferred as the grafting backbone (ii:b) are emulsion polymers which have a gel content of at least 20 percent, preferably 40 percent, more preferably 60 percent by weight.

Since, as is known, the graft monomers comprising the grafting (co)polymer (ii.a) are not grafted completely on to the grafting backbone (ii.b) during the grafting reaction, graft (co)polymers (ii) are also to be understood according to the invention to include those products which are obtained by (co)polymerization of the graft monomers in the presence of the graft base and which occur in conjunction during processing (i.e., (co)polymer from the polymerization of graft monomer(s) of (ii.a)).

Unless otherwise indicated, the average non-silicon-containing graft base particle size is a volume-weighted mean particle diameter (Dᵥ) determined by analyzing Transmission Electron Microscopy (TEM) images, for a good discussion of particle size determination see USP 6,380,304 which is incorporated herein by reference. Typically, a correction for section thickness is done when particles are larger than 1 micron.

The average particle diameter of the grafting backbone (ii.b) produced by a mass process is equal to or greater than about 0.01 microns, preferably equal to or greater than about 0.1 microns, more preferably equal to or greater than about 0.2 microns, and even more preferably equal to or greater than about 0.3 microns. The average particle diameter of the grafting backbone (ii.b) produced by a mass process is equal to or less than about 7 microns, preferably equal to or less than about 6 microns, more preferably equal to or less than about 5 microns, and even more preferably equal to or less than about 4 microns.

The non-silicon-containing graft polymers of the present invention can have a broad monomodal particle size distribution or a multi-modal particle size distribution, for example, bimodal particle size distribution. In either case, the rubber components can comprise one rubber or a blend of rubbers. In particular, more than one rubber can be used in a monomodal or bimodal process. A bimodal rubber particle size distribution is defined as having two distinct peaks of particles when graphed on axes of particle size versus volume fraction, whereby one peak designates smaller particles and the other peak designates larger particles.

Typically, in a mass produced non-silicon containing grafting backbone bimodal particle size distribution, the larger particle fraction will have a volume average particle size of from about 0.5 microns, and most preferably from about 0.7 microns to about 3 microns, preferably to about 2.5 microns, and most preferably to about 2 microns. Typically, the smaller particle fraction will have a volume average particle size of from about 0.01 microns, preferably from about 0.1 microns to 0.4 microns, preferably to about 0.35 microns, and more preferably to about 0.3 microns.

The gel content of grafting backbone (ii.b) produced by a mass process can be determined at 25°C in toluene and is at least 10 weight percent, preferably at least 15 weight percent, even more preferably at lest 20 weight percent, and most preferably at least 25 weight percent based on the total weight of the grafting backbone (ii.b).

The average particle diameter of the grafting backbone (ii.b) produced by an emulsion process is equal to or greater than about 0.01 microns, preferably equal to or greater than about 0.03 microns, and even more preferably equal to or greater than about 0.05 microns. The average particle diameter of the grafting backbone (ii.b) produced by an emulsion process is equal to or less than about 2 microns, preferably equal to or less than about 1.5 microns, and even more preferably equal to or less than about 1 micron.

Typically, in an emulsion produced grafting backbone bimodal particle size distribution, the larger particle fraction will have a volume average particle size of from about 0.3 microns, more preferably from about 0.4 microns, and most preferably from about 0.5 microns to about 3 microns, preferably to about 2 microns, more preferably to about 1.5 microns, and most preferably to about 1 micron. Typically, the smaller particle fraction will have a volume average particle size of from about 0.01 microns, preferably from about 0.03 microns to 0.3 microns, preferably from about 0.05 microns to about 0.2 microns.

The gel content of an emulsion produced grafting backbone (ii.b) is at least 20 percent by weight, preferably at least 30 percent, more preferably at least 40 percent, even more preferably at least 50 percent, and most preferably at least 60 percent by weight as measured in toluene.

For a mixture of mass produced non-silicon-containing graft (co)polymer (ii) and emulsion produced non-silicon-containing graft (co)polymer (ii) the average particle diameter of the grafting backbone (ii.b) is equal to or greater than about 0.01 microns, preferably equal to or greater than about 0.1 microns, more preferably equal to or greater than about 0.15 microns, more preferably equal to or greater than about 0.2 microns, and even more preferably equal to or greater than about 0.25 microns. For a mixture of mass produced graft (co)polymer (ii) and emulsion produced graft (co)polymer (ii) the average particle diameter of the grafting backbone (ii.b) is equal to or less than about 7 microns, preferably equal to or less than about 5 microns, more preferably equal to or less than about 4 microns, more preferably equal to or less than about 3 micron, and most preferably equal to or less than 2 microns.

For a mixture of mass produced graft (co)polymer (ii) and emulsion produced graft (co)polymer (ii) the resulting bimodal rubber particle size distribution may be described by the independent preferred rubber particle size ranges given hereinabove for mass produced graft polymer and emulsion produced graft polymer.

The non-silicon-containing graft (co)polymer (ii) is present in an amount equal to or greater than about 5 parts by weight, preferably equal to or greater than about 7 parts by weight, more preferably equal to or greater than about 10 parts by weight, and more preferably equal to or greater than about 12 parts by weight based on the total weight of the ignition resistant carbonate polymer composition. The non-silicon-containing graft (co)polymer (ii) is present in an amount equal to or less than about 60 parts by weight, preferably equal to or less than about 50 parts by weight, more preferably equal to or less than about 40 parts by weight, more preferably equal to or less than about 30 parts by weight, and more preferably equal to or less than about 25 parts by weight based on the total weight of the ignition resistant carbonate polymer composition.

Component (iii) of the present invention is a silicon-containing graft (co)polymer having a core/shell structure. It may be obtained by graft polymerizing alkyl(meth)acrylate and optionally a copolymerizable vinyl monomer onto a composite rubber core. The composite rubber core that includes interpenetrated and inseparable interpenetrating network (IPN) type polymer is characterized in that its glass transition temperature is below 0°C, preferably below -20°C, especially below -40°C. Silicon-based graft (co)polymers are well known, for example see US Publication Numbers 2008/0090961 and 2007/0155857, which are incorporated herein in their entirety.

In one embodiment, the silicon-containing graft (co)polymer comprises a core-shell morphology, including a grafted shell that contains polymerized alkyl(meth)acrylate and a composite rubber core that contains polyorganosiloxane and poly(meth)alkyl acrylate components, wherein said core comprises at least 20 to 95 percent by weight silicon, preferably 20 to 50 percent, and more preferably 25 to 35 percent by weight based on the total weight of the silicon-containing graft (co)polymer. If the level of silicon is lower than 20 weight percent, it may be difficult to attain the desired flame retardance performance required for end use applications. The shell is a rigid phase, preferably polymerized of methylmethacrylate.

The level of silicon (in percent) is determined by wavelength dispersive x-ray fluorescence (WDXRF) spectrometry. WDXRF is a non-destructive analytical technique used to determined elemental composition (atomic number ≥5) of substances (liquid, solid) at concentrations ranging from parts per million (ppm) to 100 percent. These substances may be organic and/or inorganic and they may be either a liquid or a solid. XRF can be used for qualitative, semi-quantitative, and quantitative determinations. Samples are excited with x-rays, resulting in the ejection of inner shell electrons from the sample atoms. This is followed by the transition of outer shell electrons to fill the vacancies created by the ejected electrons. These transitions result in the emission of x-ray photons whose energy is equal to the difference in binding energies of the two electron shells involved in the transition processes. A wavelength dispersive spectrometer is used to separate the x-ray emission on the basis of wavelength according to Bragg's Law. The wavelengths of these emitted x-ray photons are characteristic of the elements from which they were emitted. After applied appropriate matrix correction based upon the sample's composition, the intensity of the emitted x-ray is proportional to the concentration of the element in the sample.

In another embodiment, the silicon-containing graft (co)polymer comprises a core of polysiloxane-alkyl(meth)acrylate, sometimes referred to as an interpenetrating network (IPN) type polymer, which contains polysiloxane and butylacrylate. The shell is a rigid phase, preferably polymerized of methylmethacrylate. The weight ratio of polysiloxane/alkyl(meth)acrylate/shell is 70-90/5-15/5-15, preferably 75-85/7-12/7-12, most preferably 80/10/10.

The rubber core has median particle size (d₅₀ value) of 0.05 to 5, preferably 0.1 to 2 microns, especially 0.1 to 1 micron. The median value may be determined by ultracentrifuge measurement (W. Scholtan, H. Lange, Kolloid, Z. und Z. Polymere 250 (1972), 782-1796).

The polyorganosiloxane component in the silicone acrylate composite rubber may be prepared by reacting an organosiloxane and a multifunctional crosslinker in an emulsion polymerization process. It is also possible to insert graft-active sites into the rubber by addition of suitable unsaturated organosiloxanes.

The organosiloxane is generally cyclic, the ring structures preferably containing from 3 to 6 Si atoms. Examples include hexamethylcyclotrisiloxane, octamethylcyclotetrasiloxane, decamethylcyclopentasiloxane, dodecamethylcyclo-hexasiloxane, trimethyltriphenylcyclotrisiloxane, tetramethyltetraphenylcyclotetrasiloxane, octaphenylcyclotetrasiloxane, which may be used alone or in a mixture of two or more such compounds. The organosiloxane component is present in the silicone acrylate rubber in an amount of at least 70 percent, preferably at least 75 percent, based on weight of the silicone acrylate rubber.

Suitable crosslinking agents are tri- or tetra-functional silane compounds. Preferred examples include trimethoxymethylsilane, triethoxyphenylsilane, tetramethoxysilane, tetraethoxysilane, tetra-n-propoxysilane, tetrabutoxysilane.

Graft-active sites may be included into the polyorganosiloxane component of the silicone acrylate rubber by incorporating a compound conforming to any of the following structures:

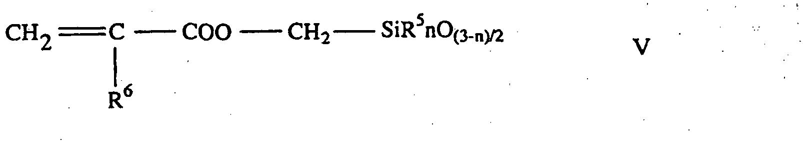

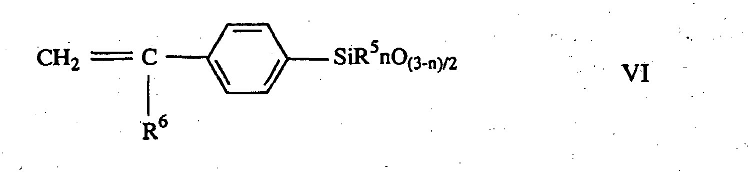

CH₂=CH-SiR⁵nO_{(3-n)/2} VII

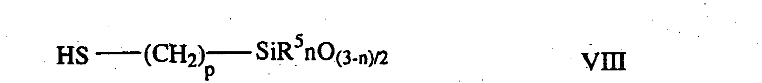

wherein
R⁵ denotes methyl, ethyl, propyl or phenyl,
R⁶ denotes hydrogen or methyl,
n denotes 0, 1 or 2, and
p denotes 1 to 6.

(Meth)acryloyloxysilane is a preferred compound for forming the structure (V). Preferred (meth)acryloyloxysilanes include β-methacryloyloxyethyl-dimethoxy-methyl-silane, γ-methacryloyl-oxy-propylmethoxy-dimethyl-silane, γ-ethacryloyloxypropyl-dimethoxy-methyl-silane, γ-methacryloyloxypropyl-trimethoxy-silane, γ-methacryloyloxy-propyl-ethoxy-diethyl-silane, γ-methacryloyloxypropyl-diethoxy-methyl-silane, γ-ethacryloyloxy-butyl-diethoxy-methyl-silane.

Vinylsiloxanes, especially tetramethyl-tetravinyl-cyclotetrasiloxane, are suitable for forming the structure VI.

p-Vinylphenyl-dimethoxy-methylsilane, for example, is suitable for forming structure VII. γ-Mercaptopropyldimethoxy-methylsilane, γ-mercaptopropylmethoxy-dimethylsilane, γ-mercaptopropyl-diethoxymethylsilane, etc, are suitable for forming structure (VIII).

The amount of these compounds is from up to 10 percent, preferably 0.5 to 5.0 percent (based on the weight of polyorganosiloxane).

The acrylate component in the silicone acrylate composite rubber may be prepared from alkyl (meth)acrylates, crosslinkers and graft-active monomer units.

Examples of preferred alkyl (meth)acrylates include alkyl acrylates, such as methyl acrylate, ethyl acrylate, n-propyl acrylate, n-butyl acrylate, 2-ethylhexyl acrylate, and alkyl methacrylates, such as hexyl methacrylate, 2-ethylhexyl methacrylate, n-lauryl methacrylate, n-butyl acrylate is particularly preferred.

Multifunctional compounds may be used as crosslinkers. Examples include ethylene glycol dimethacrylate, propylene glycol dimethacrylate, 1,3-butylene glycol dimethacrylate and 1,4-butylene glycol dimethacrylate.

The following compounds individually or in mixtures may be used for inserting graft-active sites: allyl methacrylate, triallyl cyanurate, triallyl isocyanurate, allyl methacrylate. Allyl methacrylate may also act as crosslinker. These compounds may be used in amounts of 0.1 to 20 percent, based on the weight of acrylate rubber component.

Methods of producing the silicone acrylate composite rubbers which are preferably used in the compositions according to the invention, and their grafting with monomers, are described, for example, in USP 4,888,388 and 4,963,619 both incorporated herein by reference.

The graft polymerization onto the graft base (herein iii.a) may be carried out in suspension, dispersion or emulsion. Continuous or discontinuous emulsion polymerization is preferred. The graft polymerization is carried out with free-radical initiators (e.g. peroxides, azo compounds, hydroperoxides, persulfates, perphosphates) and optionally using anionic emulsifiers, e.g. carboxonium salts, sulfonic acid salts or organic sulfates. The graft shell (iii.b) may be formed of a mixture of:
(iii.b.1) 0 to 80 percent, preferably 0 to 50 percent, especially 0 to 25 percent (based on the weight of the graft shell), of vinyl aromatic compounds or ring-substituted vinyl aromatic compounds (e.g. styrene, α-methylstyrene, p-methylstyrene), vinyl cyanides (e.g. acrylonitrile and methacrylonitrile), and
(iii.b.2) 100 to 20 percent, preferably 100 to 50 percent, especially 100 to 75 percent (based on the weight of the graft shell) of at least one monomer selected from the group consisting of (meth)acrylic acid (C₁-C₈)-alkyl esters (e.g., methyl methacrylate, n-butyl acrylate, t-butyl acrylate) and derivatives (e.g., anhydrides and imides) of unsaturated carboxylic acids (e.g., maleic anhydride and N-phenyl maleimide).

The preferred graft shell includes one or more (meth)acrylic acid (C₁-C₈)-alkyl esters, especially methyl methacrylate.

Particularly suitable graft (co)polymers are available from Mitsubishi Rayon Co., Ltd. as METABLEN^{™} SX-005 and from Kaneka Company as KANE ACE™ MR-01.

The silicon-containing graft copolymer of the present invention is present in an amount of from equal to or greater than 0.5 parts by weight, preferably equal to or greater than 1 part by weight, preferably equal to or greater than 2 parts by weight, and more preferably equal to or greater than 3 parts by weight based on the weight of the silicon-containing graft copolymer. The silicon-containing graft copolymer of the present invention is present in an amount of from equal to or less than 10 parts by weight, preferably equal to or less than 8 parts by weight, and more preferably equal to or less than 6 parts by weight based on the weight of the silicon-containing graft copolymer.

Component (iv) of the present invention is an oligomeric aromatic phosphorous compound that has the formula I: 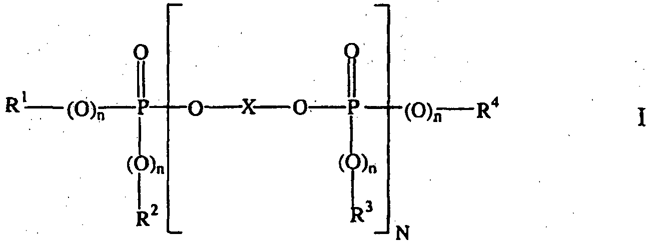 wherein in the formula I,
- R¹, R², R³ and R⁴: independently of one another each denote optionally halogenated C₁-to C₈-alkyl, or C₅- to C₆- cycloalkyl, C₆- to C₂₀- aryl or C₇- to C₁₂- aralkyl, in each case optionally substituted by alkyl, preferably C₁-C₄-alkyl, and/or halogen, preferably bromine or chlorine. Preferably, R¹, R², R³ and R⁴ independently of one another represent C₁-C₄ -alkyl, phenyl, naphthyl or phenyl-C₁-C₄-alkyl. The aromatic groups R¹, R², R³ and R⁴ can in turn be substituted by halogen and/or alkyl groups, preferably chlorine, bromine and/or C₁-C₄-alkyl. Particularly preferred aryl radicals are cresyl, phenyl, xylenyl, propylphenyl or butylphenyl and the corresponding brominated and chlorinated derivatives thereof.
- X: in the formula I denotes a mono- or polynuclear aromatic radical having 6 to 30 C atoms. This is derived from diphenols of the formula II. Preferred diphenols are diphenylphenol, bisphenol A, resorcinol or hydroquinone or chlorinated or brominated derivatives thereof.
- n: in the formula I independently of one another can be 0 or 1, and n is preferably 1.
- N: represents values greater than 0 and less than 30, preferably an average value of 0.3 to 20, particularly preferably 0.5 to 10, in particular 0.5 to 6. Compounds of the formula Ia 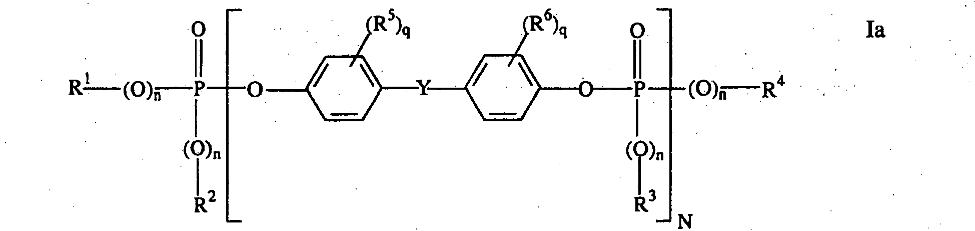
wherein
- R¹, R², R³ and R⁴, n and N: have the meaning given above in the case of formula I,
- R⁵ and R⁶: independently of one another denote C₁-C₄-alkyl, preferably methyl, or halogen, preferably chlorine and/or bromine,
- Y: denotes C₁-C₇-alkylidene, C₁-C₇-alkylene, C₅-C₁₂-cycloalkylene, C₅-C₁₂-cycloalkylidene, --O--, --S--, --SO-- or --CO-and q denotes 0 or the number 1 or 2, and Y preferably represents C₁-C₇-alkylidene, in particular isopropylidene, or methylene
are furthermore also a preferred phosphorus compound.

In the formula Ia, the group Ib 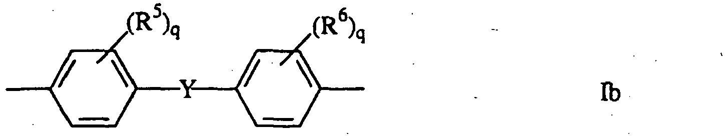 corresponds to the radical X in formula I.

Oligomeric phosphates or oligophosphates (where N is greater than 0 to less than 30) or mixtures of mono- and oligophosphates (N>0) can be employed as component (iv) according to the invention. However, we have found that ignition resistant carbonate compositions containing only a monophosphate (N=0) as the phosphorous compound (in combination with the silicon-containing core/shell rubber of the present invention) do not demonstrate desirable hydrolytic stability.

In one embodiment, component (iv) is preferably present in the molding compositions according to the invention as a mixture of 1 to 99 weight percent, preferably 3 to 95 weight percent, more preferably 5 to 90 weight percent, more preferably 10 to 90 weight percent, more preferably 12 to 40 weight percent of at least one monophosphorus compound of the formula I and 1 to 99 weight percent, preferably 5 to 97 weight percent, more preferably 10 to 95 weight percent, more 10 to 90 weight percent, more preferably 60 to 88 weight percent of at least one oligophosphorus compound of the formula I, in each case weight percent based on the total weight of phosphorus compounds, and the mixture having an average N of 0.3 to 20, preferably 0.5 to 10, particularly preferably 0.5 to 6.

Monophosphorus compounds of the formula I that can be used in conjunction with oligophosphorus compounds are, in particular, tributyl phosphate, tris-(2-chloroethyl) phosphate, tris-(2,3-dibromopropyl) phosphate, triphenyl phosphate, tricresyl phosphate, diphenyl cresyl phosphate, diphenyl octyl phosphate, diphenyl 2-ethylcresyl phosphate, tri-(isopropylphenyl) phosphate, halogen-substituted aryl phosphates, methylphosphonic acid dimethyl ester, methylphosphonic acid diphenyl ester, phenylphosphonic acid diethyl ester, triphenylphosphine oxide or tricresylphosphine oxide.

The phosphorus compounds according to component (iv) are known, for example see EP-A 363 608 and EP-A 640 655.

The phosphorus compounds (iv) are present in an amount equal to or greater than 2 parts by weight, preferably equal to or greater than 4 part by weight, more preferably equal to or greater than 6 parts by weight, and most preferably equal to or greater than 8 parts by weight based on the total weight of the ignition resistant carbonate polymer composition of the invention. The phosphorus compounds (iv) are present in an amount equal to or less than 30 parts by weight, preferably equal to or less than 25 parts by weight, more preferably equal to or less than 20 parts by weight, and most preferably equal to or less than 15 parts by weight based on the total weight of the ignition resistant carbonate polymer composition of the invention.

The anti-drip component (v) of the present invention comprises a mixture of a polytetrafluoroethylene, preferably fibrillating polytetrafluoroethylene, and a fluorothermoplast. The fibrillating polytetrafluoroethylene (PTFE) is typically a homopolymer of tetrafluoroethylene (TFE) but may also be a copolymer of TFE with for example another fluorinated monomer such as chlorotrifluoroethylene (CTFE), a perfluorinated vinyl ether such as perfluoromethyl vinyl ether (PMVE) or a perfluorinated olefin such as hexafluoropropylene (HFP). The amount of the fluorinated comonomer should however be low enough so as to obtain a high molecular weight polymer that is not processible from the melt. This means in general that the melt viscosity of the polymer should be more than 10¹⁰ Pascal seconds (Pa.s.). Typically the amount of the optional comonomers should not be more than 1 percent so that the PTFE conforms to the ISO 12086 standard defining non-melt processible PTFE. Such copolymers of TFE are known in the art as modified PTFE.

The fibrillating PTFE typically has an average particle size (number average) of not more than 10 micron. Generally the average particle size of the fibrillating PTFE will be between 50 nanometer and 5 micron, for example between 100 nanometer and 1 micron. A practical range may be from 50 to 500 nanometers. Conveniently, fibrillating PTFE can be produced via aqueous emulsion polymerization.

The fluorothermoplast used is typically a semi-crystalline fluoropolynner. Typically the fluorothermoplast should have a melting point such that the fluorothermoplast is in its molten state under the melt processing conditions used for processing the carbonate polymer composition. Fluorothermoplasts having a melting point of 100°C to 310°C are generally desired for use in this invention. Preferably, the fluorothermoplast has a melting point of between 100°C and 250°C. Frequently, the fluorothermoplast will have a melting point of not more than 225°C.

The fluorothermoplast should be used in amount effective to avoid agglomeration of the particles of fibrillating PTFE. The effective amount can be easily determined by one skilled in the art with routine experimentation. Typically, an effective amount of fluorothermoplast is an amount of at least 10 percent by weight based on the weight of fibrillating PTFE. It will generally be desired to maximize the amount of PTFE as a higher amount of PTFE will make the latter more effective in achieving desired effects when added to the carbonate polymer composition melt such as for example increasing the melt strength of the carbonate polymer composition. A practical range of the amount of fluorothermoplast is at least 10 percent by weight, for example between 10 and 60 percent by weight, conveniently between 12 and 50 percent by weight, commonly between 15 and 30 percent by weight based on the total weight of fibrillating PTFE.

Suitable fluorothermoplasts, for use include fluoropolymers that comprise interpolymerized units derived from at least one fluorinated, ethylenically unsaturated monomer, preferably two or more monomers, of the formula IX:

R⁷CF=CR₂ IX

wherein each R⁷ is independently selected from H, F, Cl, alkyl of from 1 to 8 carbon atoms, aryl of from 1 to 8 carbon atoms, cyclic alkyl of from 0.5 to 10 carbon atoms, or perfluoroalkyl of from 1 to 8 carbon atoms. The R group preferably contains from 1 to 3 carbon atoms. In this monomer each R group may be the same as each of the other R groups. Alternatively, each R group may be different from one or more of the other R groups.

The fluoropolymer may also comprise a copolymer derived from the interpolymerization of at least one formula IX monomer with at least one nonfluorinated, copolymerizable comonomer having the formula X:

R⁸₂C=CR⁸₂ X

wherein each of R⁸ is independently selected from H, Cl, or an alkyl group of from 1 to 8 carbon atoms, a cyclic alkyl group of from 0.5 to 10 carbon atoms, or an aryl group of from 1 to 8 carbon atoms. R⁸ preferably contains from 1 to 3 carbon atoms.

Representative examples of useful fluorinated formula IX monomers include, but are not limited to vinylidene fluoride, tetrafluoroethylene, hexafluoropropylene, chlorotrifluoroethylene, 2-chloropentafluoropropene, dichlorodifluoroethylene, 1,1-dichlorofluoroethylene, and mixtures thereof. Perfluoro-1, 3-dioxoles may also be used. The perfluoro-1,3-dioxole monomers and their copolymers are described in USP 4,558,141, which is incorporated herein by reference.

Representative examples of useful formula X monomers include ethylene, propylene, etc.

Particular examples of fluoropolymers include polyvinylidene fluoride, fluoropolymers derived from the interpolymerization of two or more different formula IX monomers and fluoropolymers derived from one or more formula IX monomers with one or more formula X monomers. Examples of such polymers are those having interpolymerized units derived from vinylidene fluoride (VDF) and hexafluoropropylene (HFP); and those derived from tetrafluoroethylene (TFE) and at least 5 weight percent of at least one copolymerizable comonomer other than TFE. This latter class of fluoropolymers includes polymers of interpolymerized units derived from TFE and HFP; polymers of interpolymerized units derived from TFE, HFP and VDF; polymers of interpolymerized units derived from TFE, HFP and a formula X monomer; and polymers derived from interpolymerized units derived from TFE and a formula X monomer.

The fluorothermoplast may be produced by any of the known polymerization techniques although aqueous emulsion polymerization will generally be preferred for obtaining the melt-processible thermoplastic fluoropolymer.

Component (v) is preferably prepared by blending an aqueous dispersion of the fibrillating PTFE with an aqueous dispersion of the fluorothermoplast and coagulating the mixed dispersion followed by drying the product. Such a method is disclosed in for example WO 01/27197. Such method offers the advantage that fibrillation of the PTFE is avoided while preparing component (v). It is however also possible to prepare component (v) by dry blending the PTFE and the fluorothermoplast. However, in the latter case, care should be taken that the shear forces applied in the blending operation do not cause the PTFE to fibrillate. Accordingly, blending should then typically be carried out at low temperatures at which fibrillation can be avoided. Once the PTFE is blended with an effective amount of the fluorothermoplast, fibrillation of the PTFE may be prevented and the melt additive can thus be handled in a conventional way. Component (v) may contain further adjuvants to obtain particular desired properties.

Component (v) comprising a mixture of a polytetrafluoroethylene and a fluorothermoplast is present in an amount equal to or greater than about 0.01 parts by weight, preferably equal to or greater than about 0.05 parts by weight, more preferably equal to or greater than about 0.1 parts by weight, more preferably equal to or greater than about 0.2 parts by weight, and more preferably equal to or greater than about 0.3 parts by weight based on the weight of the ignition resistant carbonate polymer composition. Component (v) comprising a polytetrafluoroethylene, a fluorothermoplast, or mixtures thereof is present in an amount equal to or less than about 5 parts by weight, preferably equal to or less than about 3 parts by weight, more preferably equal to or less than about 1 parts by weight, more preferably equal to or less than about 0.8 parts by weight, more preferably equal to or less than about 0.6 parts by weight, and more preferably equal to or less than about 0.5 parts by weight based on the weight of the ignition resistant carbonate polymer composition.

The ignition resistant carbonate polymer compositions according to the invention contains as component (vi) at least one of an additional polymer and/or conventional additive, such as a thermoplastic vinyl (co)polymer, an impact modifier other or different from component (iii), lubricants, mold release agents such as pentaerythritol tetrastearate, nucleating agents, anti-static agents, stabilizers, fillers and reinforcing materials, dyes or pigments. One such stabilizer is present to minimize ester-carbonate interchange. Such stabilizers are known in the art, for example see USP 5,922,816; 4,532,290; 4,401,804, all of which are incorporated herein by reference, and may comprise certain phosphorous containing compounds that include phosphoric acid, certain organic phosphorous compounds such as distearyl pentaerythritol diphosphate, mono or dihydrogen phosphate, or mono-, di-, or trihydrogen phosphate compounds, phosphate compounds, and certain inorganic phosphorous compounds such as monosodium phosphate and monopotassium phosphate, silyl phosphates, and silyl phosphate derivatives, alone or in combination and present in an amount effective to inhibit ester-carbonate interchange in the composition.

If present, suitable thermoplastic vinyl (co)polymers are polymers of at least one monomer from the group comprising aromatic vinyl compounds, vinyl cyanides (unsaturated nitrites), (meth)acrylic acid (C₁ - C₈)-alkyl esters, unsaturated carboxylic acids, as well as derivatives (such as anhydrides and imides) of unsaturated carboxylic acids. It is understood that thermoplastic polyalkylene dicarboxylate polymers (alternatively referred to as polyester polymers, for example polyethylene terephthalate (PET), polybutylene terephthalate, (PBT), and the like) are not included in the definition of component (vi) and are not considered to be described by the herein term 'thermoplastic vinyl (co)polymers'.

(Co)polymers which are particularly suitable are those of (a) in an amount of from 50 to 99, preferably 60 to 80 parts by weight of aromatic vinyl compounds and/or aromatic vinyl compounds which comprise substituted nuclei, such as styrene, α-methylstyrene, p-methylstyrene, p-chlorostyrene and/or methacrylic acid (C₁ - C₄)-alkyl esters, such as methyl methacrylate or ethyl methacrylate, and (b) in an amount of from 1 to 50, preferably 20 to 40 parts by weight vinyl cyanides (unsaturated nitrites) such as acrylonitrile and methacrylonitrile and/or (meth)acrylic acid (C₁ - C₈) esters (such as methyl methacrylate, n-butyl acrylate or t-butyl acrylate) and/or unsaturated carboxylic acids (such as maleic acid) and/or derivatives (such as anhydrides and imides) of unsaturated carboxylic acids (for example maleic anhydride and N-phenyl-maleimide).

The copolymer of (a) styrene and (b) acrylonitrile (SAN) is particularly preferred.

(Co)polymers are thermoplastic and free from rubber. The (co)polymers are known and can be produced by radical polymerization, particularly by emulsion, suspension, solution or bulk (mass) polymerization. The (co)polymers preferably have molecular weights M_{w} (weight average, as determined by GPC using laser scattering techniques and narrow molecular weight polystyrene standards) between 15,000 and 200,000.

(Co)polymers according to the present invention are frequently produced as byproducts during the graft polymerization of component (ii), particularly when large amounts of monomers (ii.a.1) and (ii.a.2) comprising grafting copolymer (ii.a) are grafted on to small amounts of rubber (ii.b). The amount of (co)polymer which can also optionally be used according to the invention does not include these by-products of the graft polymerization of (ii).

If a (co)polymer is present in the ignition resistant carbonate polymer compositions according to the invention, the ratio by weight of components (ii):(co)polymer may desirably be between 2:1 and 1:4, preferably between 1:1 and 1:2.

If present, the thermoplastic vinyl (co)polymer is present in an amount equal to or greater than about 0.5 parts by weight, preferably equal to or greater than about 1 part by weight, more preferably equal to or greater than about 2 parts by weight, more preferably equal to or greater than about 5 parts by weight, and more preferably equal to or greater than about 10 parts by weight based on the weight of the ignition resistant carbonate polymer composition. If present, the thermoplastic vinyl (co)polymer is present in an amount equal to or less than about 45 parts by weight, preferably equal to or less than about 40 parts by weight, more preferably equal to or less than about 35 parts by weight, more preferably equal to or less than about 30 parts by weight, and more preferably equal to or less than about 25 parts by weight based on the weight of the ignition resistant carbonate polymer composition.

If a vinyl thermoplastic (co)polymer is present in the ignition resistant carbonate polymer compositions according to the invention, the ratio by weight of components (ii):(iii) may desirably be between 2:1 and 1:4, preferably between 1:1 and 1:2.

The ignition resistant carbonate polymer compositions of the present invention may further comprise a filler and/or reinforcing material. Preferred fillers, which may also have a reinforcing action, are glass fibers, carbon fibers, metal fibers, metal coated fibers, thermoset fibers, glass beads, mica, silicates, quartz, talc, titanium dioxide, and/or wollastonite alone or in combinations.

If present, the filler and/or reinforcing material is present in an amount equal to or greater than about 0.5 parts by weight, preferably equal to or greater than about 1 part by weight, more preferably equal to or greater than about 2 parts by weight, more preferably equal to or greater than about 5 parts by weight, and more preferably equal to or greater than about 10 parts by weight based on the weight of the ignition resistant carbonate polymer composition. If present, the filler and/or reinforcing material is present in an amount equal to or less than about 60 parts by weight, preferably equal to or less than about 40 parts by weight, more preferably equal to or less than about 30 parts by weight, more preferably equal to or less than about 25 parts by weight, and more preferably equal to or less than about 20 parts by weight based on the weight of the ignition resistant carbonate polymer composition.

The ignition resistant carbonate polymer composition of the present invention may further comprise an impact modifier different from (ii) and (iii), for example see USP 6,545,089 and US Publication 2007/0225441 which are incorporated herein by reference. Preferable impact modifiers are rubber materials having a T_{g} equal to or less than 0°C, preferably equal to or less than -10°C, more preferably equal to or less than -20°C, and most preferably equal to or less than -30°C. Suitable rubbers include polymers such as styrene and butadiene (SB) copolymer, acrylate rubbers, particularly homopolymers and copolymers of alkyl acrylates having from 4 to 6 carbons in the alkyl group or polyolefin elastomers, particularly copolymers of ethylene, propylene and optionally a nonconjugated diene. In addition, mixtures of the foregoing rubbery polymers may be employed if desired.

In one embodiment, the impact modifier is a grafted homopolymer or copolymer of butadiene that is grafted with a polymer of styrene and methyl methacrylate. Some of the preferred rubber-containing materials of this type are the known methyl methacrylate, butadiene, and styrene (MBS) core/shell grafted copolymers having a T_{g} equal to or less than 0°C and a rubber content greater than 40 percent, typically greater than 50 percent. They are generally obtained by graft polymerizing styrene and methyl methacrylate and/or equivalent monomers in the presence of a conjugated diene polymer rubber core, preferably a butadiene homo- or co-polymer. The grafting monomers may be added to the reaction mixture simultaneously or in sequence, and, when added in sequence, layers, shells or wart-like appendages can be built up around the substrate latex, or core. The monomers can be added in various ratios to each other.

Other impact modifiers useful in the compositions of this invention are those based generally on a long-chain, hydrocarbon backbone, which may be prepared predominantly from various mono- or dialkenyl monomers and may be grafted with one or more styrenic monomers. Representative examples of a few olefinic elastomers which illustrate the variation in the known substances which would suffice for such purpose are as follows: butyl rubber; chlorinated polyethylene rubber (CPE); chlorosulfonated polyethylene rubber; an olefin polymer or copolymer such as ethylene/propylene (EP) copolymer, ethylene/styrene (ES) copolymer or ethylene/propylene/ diene (EPDM) copolymer, which may be grafted with one or more styrenic monomers; neoprene rubber; nitrile rubber; polybutadiene and polyisoprene.

If used, the impact modifier is preferably present in an amount of at least about 1 part by weight, preferably at least about 2 parts by weight, more preferably at least about 5 parts by weight, even more preferably at least about 7.5 parts by weight, and most preferably at least about 10 parts by weight based on the total weight of the polymer blend composition. Generally, the impact modifier is present in an amount less than or equal to about 30 parts by weight, preferably less than or equal to about 25 parts by weight, more preferably less than or equal to about 20 parts by weight, even more preferably less than or equal to about 15 parts by weight, and most preferably less than or equal to about 10 parts by weight based on the weight of the polymer blend composition.

The ignition resistant carbonate polymer compositions comprising components (i), (ii), (iii), (iv), (v) and (vi) are produced by mixing the particular components in a known manner and melt-compounding and/or melt-extruding them at temperatures of from 200°C to 300°C in conventional units such as internal kneaders, extruders and twin-screw extruders.

The individual components may be mixed in a known manner both in succession and simultaneously and both at approximately 23°C (room temperature) and at a higher temperature.

The present invention accordingly also provides a process for the production of the ignition resistant carbonate polymer compositions.

By virtue of their excellent ignition resistance, in particular short burn time, and good mechanical properties and elevated heat resistance, the ignition resistant carbonate polymer compositions according to the invention are suitable for the production of fabricated articles of any kind, in particular those subject to stringent requirements with regard to mechanical properties and especially requiring good impact resistance and hydrolytic stability.

The ignition resistant carbonate polymer compositions of the present invention are thermoplastic. When softened or melted by the application of heat, the ignition resistant carbonate polymer compositions of this invention can be formed or molded into fabricated articles using conventional techniques such as compression molding, injection molding, gas assisted injection molding, calendaring, vacuum forming, thermoforming, extrusion and/or blow molding, alone or in combination. The ignition resistant polymer compositions can also be fabricated, formed, spun, or drawn into films, fibers, multi-layer laminates or extruded into sheets and/or profiles. Examples of fabricated articles which may be produced are: enclosures of all kinds, for example for domestic appliances such as juice extractors, coffee machines, food mixers, for office equipment, such as monitors, printers, copiers or cladding sheet for the building sector and automotive components. They may also be used in electrical engineering applications as they have very good electrical properties.

The ignition resistant carbonate polymer compositions according to the invention may furthermore, for example, be used to produce the following fabricated articles or shaped articles: interior trim for rail vehicles, interior and exterior automotive applications, enclosures for electrical devices containing small transformers, enclosures for information dissemination and transmission devices, enclosures and cladding for medical purposes, massage devices and enclosures therefore, toy vehicles for children, sheet wall elements, enclosures for safety equipment, hatchback spoilers, thermally insulated transport containers, apparatus for keeping or caring for small animals, articles for sanitary and bathroom installations, cover grilles for ventilation openings, articles for summer houses and sheds, and enclosures for garden appliances. Preferred fabricated articles include housings or enclosures such as for: power tools, appliances, consumer electronic equipment such as TVs, VCRs, DVD players, web appliances, electronic books, etc., or housings or enclosures such as for: information technology equipment such as telephones, computers, monitors, fax machines, battery chargers, scanners, copiers, printers, hand held computers, flat screen displays, etc.

The present invention accordingly also provides the use of the ignition resistant carbonate polymer compositions according to the invention for the production of fabricated articles of all kinds, preferably those stated above, and the articles made from the ignition resistant carbonate polymer compositions according to the invention.

### EXAMPLES

To illustrate the practice of this invention, examples of preferred embodiments are set forth below. However, these examples do not in any manner restrict the scope of this invention.

The compositions of Examples 1 to 6 and Comparative Examples A to H are melt compounded in a Werner and Pfleiderer ZSK-25 25 millimeter (mm) twin-screw co-rotating extruder. The temperature profile from the hopper to the nozzle is 220°C to 265°C. Prior to compounding, the polycarbonate is dried for at least 4 hours at 120°C. A three feeder system is used: a mixture of polycarbonate and ABS pellets is fed via one feeder, powdered additives (including the silicon-containing graft copolymer and/or the TTP if applicable) are added as a dry blend via a second feeder, and the phosphorous compound (BAPP) is heated and added via a liquid feeder. The mold release agent is sprayed onto the polycarbonate pellets prior to feeding them into the extruder. The throughput is 10 kilograms per hour (kg/hr); the extrudate is cooled in a 50°C water bath and commuted to pellets.

Mechanical and thermal property test specimens measuring 3.2mm thick are injection molded on a Demag IntElect 80/370-310 type electrical injection molding machine with the following parameters: Barrel Profile, nozzle to hopper: 290°C to 250°C; Mold Temperature: 80°C; and Cycle Time: 57 seconds.

UL 94 burn test specimens measuring 1.6mm thick are injection molded on a Demag IntElect 80/370-310 type electrical injection molding machine with the following parameters: Barrel Profile, nozzle to hopper: 235°C to 240°C ; Mold Temperature: 60°C; and Cycle Time: 39.5 seconds.

The formulation content of Examples 1 to 6 and Comparative Examples A to H are given in Table 1, amounts are in parts by weight based on the total weight of the composition. In Table 1:
"PC" is a linear bisphenol-A polycarbonate homopolymer having a melt flow rate of 31 grams per 10 minutes (g/10 min) as determined at 300°C under a load of 1.2 kg and a weight average molecular weight of about 20,500;
"mABS-1" is a mass polymerized acrylonitrile, butadiene, and styrene terpolymer having about 15 percent acrylonitrile, 12 percent butadiene rubber, a styrene:acrylonitrile ratio of about 83:17, a melt flow rate of 11.5 g/10 min (determined at 220°C under a load of 10kg), and an average rubber particle size (Dv) as determined by Coulter Counter of 1.2 microns;
"mABS-2" is a mass polymerized acrylonitrile, butadiene, and styrene terpolymer having about 21 percent acrylonitrile, 11 percent butadiene rubber, 4 percent butylacrylate, a styrene:acrylonitrile ratio of about 74:26, a melt flow rate of 28 g/10 min (determined at 220°C under a load of 10kg), and an average rubber particle size (Dv) as determined by Coulter Counter of 0.65 microns;
"eABS" is an emulsion polymerized acrylonitrile, butadiene, and styrene terpolymer having about 12 percent acrylonitrile and 48 percent butadiene rubber;
"SAN" is a styrene and acrylonitrile copolymer comprising 75 percent styrene and 25 acrylonitrile having a melt flow rate of 4.5 (determined at 230°C under a load of 3.8kg);
"Si-rubber-1" is a silicon-acrylate graft copolymer wherein the core comprises 29 percent by weight silicon and having a Tg of -106°C available as KANE ACE MR-01 available from Kaneka Company;
"Si-rubber-2" is a silicon-acrylate graft copolymer wherein the core comprises 23 percent by weight silicon and having a Tg of -103°C available as METABLEN SX-005 available from Mitsubishi Rayon Company;
"Si-rubber-3" is a silicon-acrylate graft copolymer wherein the core comprises 3.4 percent by weight silicon and having a Tg of -46°C available as METABLEN S2001 available from Mitsubishi Rayon Company;
"BAPP" is an oligomeric phosphate flame retardant comprising bisphenol-A bis(diphenyl phosphate) according to Formula I having an average 'N' value of about 1.13 available as REOFOS^{™} BAPP from Chemtura Corporation;
"TPP" is a monomeric phosphate flame retardant comprising triphenyl phosphate according to Formula I wherein the average 'N' value is 0 is available as REOFOS TPP from Chemtura Corporation;
"PTFE-1" is an anti-drip agent comprising a mixture if a fibril forming polytetrafluoroethylene polymer and a fluorothermoplast available as DYNEON^{™} MM5935EF from 3M;
"MRA" is a mold release agent comprising pentaerythritol tetrastearate available as LOXIOL^{™} P861/3.5 from Cognis; and
"ANTIOX" is a phenolic antioxidant available as IRGANOX^{™} 1076 from Ciba Geigy.

Property performance for Examples 1 to 6 and Comparative Examples A to H are reported in Table 1. In Table 1:
"Vicat" softening temperature is determined on a Ceast HDT 300 Vicat machine in accordance with ISO 306 at 120° per hour and 1 kg;
"Tm" is tensile modulus which is determined in accordance with ISO 527 at room temperature using an Zwick 1455 mechanical tester and performed at a rate of 1mm/min;
"UL-94" is The Underwriters Laboratories' Standard 94 flammability test which is performed on 1.6mm specimens. Ratings are according to the standard;
"Izod" impact resistance as measured by the Notched Izod test is determined according to ISO 180/1A at 23°C. Test specimens measured 10mm by 80mm by 4mm. The specimens were notched with a notcher to give a 250 micrometer radius notch. A Zwick 5110 Izod impact testing unit was used; and
"Spiral Flow" flow length measured in millimeters is determined on a Demag IntElect 80/370 - 150 having a screw diameter of 25mm using an open spiral mold with the following dimensions: Total potential length: 117 centimeters (cm); Thickness: 2mm; and Width: 5mm. The injection molding conditions are:

| | |
|---|---|
| Temperature, °C | 260 |
| Injection Pressure, Bar | 1,200 |
| Injection Speed, mm/sec | 100 |
| Holding Time, sec | 0.5 |
| Holding Pressure, Bar | 300 |
| Cooling Time, sec | 25 |
| Rotation Per Minute (RPM) | 100 |
| Back Pressure, Bar | 120 |
| Dosing, mm | 24 |

"HDT" is heat deflection temperature determined at 1.80 MPa according to ISO 75A using a Ceast heat deflection temperature apparatus; and
"Hydrolytic Stability" is determined on injection moulded plaques, molded at 320°C. Hydrolytic stability of the samples is determined by measuring the weight average molecular weight of the ignition resistant carbonate composition before and after autoclaving is measured. The greater the decrease in weight average molecular weight (the larger the ΔMw value), the poorer the hydrolytic stability.

Plaques are autoclaved for 24 hours at 125°C/ 100 percent relative humidity in a MK 3 st13 Laboratory Autoclave 40/70E, available from Linden: The 3mm injection moulded polycarbonate plaques (75mm x 50mm x 3mm) are placed into the autoclave. There is no contact between the plaques nor contact between the plaques and the metal autoclave wall is allowed. After reaching the temperature of 100°C, steam is introduced for 3 minutes. The steam is allowed to bleed away from the autoclave (steam bleeding). During this time, steam pressure rises to as much as 150 kilo Pascals (kPa). After the steaming period, the temperature is increased to 125°C. During this period, steam pressure rises up to 247 kPa. As soon the temperature of 125°C is reached, steam pressure is decreased to and controlled at 239 kPa. Under these conditions, 100 percent relative humidity is obtained. The sterilizing time is 24 hours. After 24 hours, the heating is

**Table 1**

| Example | 1 | 2 | 3 | | 4 | 5 | 6 | | | | | | | | | |
|---|---|---|---|---|---|---|---|---|---|---|---|---|---|---|---|---|
| Comparative Example | | | | | | | | | A | B | C | D | E | F | G | H |
| Component | | | | | | | | | | | | | | | | |
| PC | 80.1 | 80.1 | 76.9 | | 66.9 | 76.9 | 76.9 | | 80.1 | 76.9 | 77.9 | 76.9 | 76.9 | 66.9 | 76.9 | 66.9 |
| mABS-1 | | | | | | 10 | 10 | | | 10 | | 10 | | | | |
| mABS-2 | 10 | 10 | 10 | | 20 | | | | 10 | | 10 | | | | 10 | 20 |
| eABS | | | | | | | | | | | | | 23 | 4.6 | | |
| SAN | | | | | | | | | | | | | 7.7 | 15.4 | | |
| Si-Rubber-1 | 1 | | 2 | | 2 | 2 | | | | | | | 2 | 2 | 2 | 2 |
| Si-Rubber-2 | | 1 | | | | | 2 | | | | | | | | | |
| Si-Rubber-3 | | | | | | | | | 2 | 2 | 1 | 2 | | | | |
| BAPP | 8 | 8 | 10 | | 10 | 10 | 10 | | 8 | 10 | 10 | 10 | 10 | 10 | | |
| TPP | | | | | | | | | | | | | | | 10 | 10 |
| PTFE-1 | 0.2 | 0.2 | 0.4 | | 0.4 | 0.4 | 0.4 | | 0.2 | 0.4 | 0.4 | 0.4 | 0.4 | 0.4 | 0.4 | 0.4 |
| | | | | | | | | | | | | | | | | |
| MRA | 0.4 | 0.4 | 0.4 | | 0.4 | 0.4 | 0.4 | | 0.4 | 0.4 | 0.4 | 0.4 | 0.4 | 0.4 | 0.4 | 0.4 |
| ANTIOX | 0.3 | 0.3 | 0.3 | | 0.3 | 0.3 | 0.3 | | 0.3 | 0.3 | 0.3 | 0.3 | 03 | 0.3 | 0.3 | 0.3 |
| Properties | | | | | | | | | | | | | | | | |
| Vicat, °C | 120 | 121 | 116 | | 113 | 114 | 114 | | 119 | 115 | 115 | 115 | 116 | 114 | 105 | 103 |
| Tm, MPa | 2670 | 2700 | 2860 | | 2690 | 2650 | 2670 | | 2750 | 2700 | 2790 | 2700 | 2900 | 2750 | 2650 | 2540 |
| UL-94 @ 1.6mm | V-0 | V-0 | V-0 | | V-1 | V-0 | V-0 | | V-2 | V-2 | V-2 | V-2 | V-0 | V-1 | V-0 | V-1 |
| Izod, kJ/m² | 5 | 6.6 | 5.4 | | 5.5 | 8.7 | 7 | | 6.1 | 9.2 | 5.5 | 7.3 | 3.8 | 4.1 | 4.2 | 4.5 |
| Spiral Flow, mm | 53 | 48 | 53 | | 63 | 49 | 50 | | 49 | 50 | 53 | 51 | 54 | 66 | 59 | 71 |
| HDT. °C | 93 | 95 | 89.7 | | 86.3 | 91.4 | 87.9 | | 94 | 903 | 87.5 | 89.9 | 903 | 87 | 78.6 | 76.4 |
| Hydrolytic Stability | | | | | | | | | | | | | | | | |
| PC MW before | 20410 | 20410 | 20410 | | 20410 | 20410 | 20410 | | 20410 | 20410 | 20410 | 20410 | 20410 | 20410 | 20410 | 20410 |
| PC MW after | 20090 | 20070 | 19580 | | 19450 | 19690 | 19800 | | 19450 | 18950 | 19050 | 18800 | 15900 | 15450 | 17250 | 16980 |
| Δ MW, % | 1.6 | 1.7 | 4.1 | | 4.7 | 3.5 | 3 | | 4.7 | 7.2 | 6.7 | 7.9 | 22.1 | 243 | 15.5 | 16.8 |

automatically turned off. The plaques are taken out of the autoclave as soon as the temperature has reached 50°C.

As can be seen by the data hereinabove, the examples of the invention comprising a mass polymerized non-silicon-containing graft copolymer, a high silicon content silicon-containing graft copolymer, and an oligomeric phosphorous compound demonstrate a better combination of flammability, impact resistance, hydrolytic stability, and flow length performance as compared to the comparative examples comprising an emulsion polymerized non-silicon-containing graft copolymer and/or a low silicon content silicon-containing graft copolymer and/or a monomeric phosphorous compound.

## Claims

1. An ignition resistant carbonate polymer composition comprising:
(i) an aromatic polycarbonate or an aromatic polyester carbonate.
(ii) a non-silicon-containing graft (co)polymer produced by mass polymerization,
(iii) a silicon-containing graft (co)polymer having a core-shell morphology, including a grafted shell that contains polymerized alkyl(meth)acrylate and as composite rubber core that contains polyorganosiloxane and poly(meth)alkyl acrylate components, wherein said core comprises at least 20 percent by weight silicon based on the total weight of the silicon-containing graft (co)polymer,
(iv) an oligomeric aromatic phosphorous compound represented by the formula I: 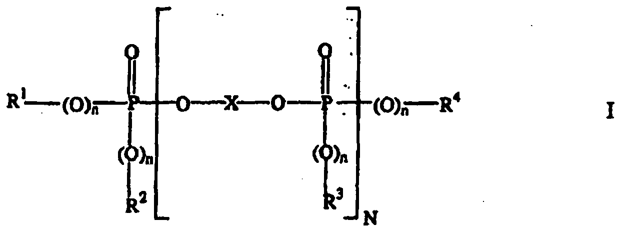 wherein,
R¹, R², R³ and R⁴ independently of one another each denote optionally halogenated C₁- to C₈-alkyl, or C₅- to C₄- cycloalkyl, C₆- to C₂₀- aryl or C₇- to C₁₂- aralkyl, in each case optionally substituted by alkyl and/or halogen,
X denotes a mono- or polynuclear aromatic radical having 6 to 30 C atoms,
n independently of one another is 0 or 1,
N represents values greater than 0 and less than 30,
(v) a mixture of a polytetrafluoroethylene polymer and a fluorothermoplast, and
(vi) one or more of a thermoplastic vinyl (co)polymer, an impact modifier different from (iii), a filler, a reinforcing material, a stabilizer, a pigment, a dye, a mold release, a lubricant, or an anti-static agent.

2. An ignition resistant carbonate polymer composition consisting of:
(i) from 30 to 75 parts by weight of an aromatic polycarbonate or an aromatic polyester carbonate,
(ii) from 5 to 60 parts by weight of a non-silicon-containing graft (co)polymer produced by mass polymerization of
(ii.a) from 5 to 99 percent by weight of a grafting (co)polymer comprising one or more vinyl monomers on
(ii.b) from 95 to 1 percent by weight of one or more a grafting backbone having a glass transition temperature (T_{g}) of less than 10°C wherein percents by weight are based on the total weight of the graft (co)polymer,
(iii) from 0.5 to 10 parts by weight of a silicon-containing graft (co)polymer having a core-shell morphology, including a grafted shell that contains polymerized alkyl(meth)acrylate and a composite rubber core that contains polyorganosiloxane and poly(meth)alkyl acrylate components, wherein said core comprises at least 20 percent by weight silicon based on the total weight of the silicon-containing graft (co)polymer,
(iv) from 2 to 20 parts by weight of an oligomeric aromatic phosphorous compound represented by the formula I: 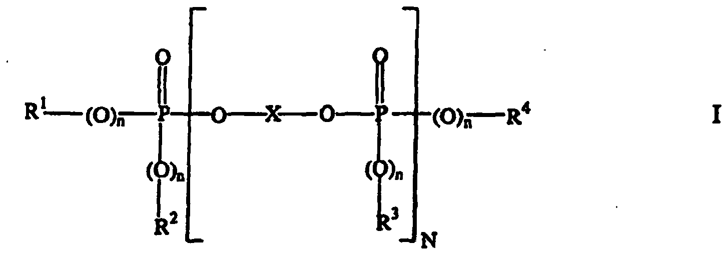 wherein in the formula I,
R¹, R², R³ and R⁴ independently of one another each denote optionally halogenated C₁- to C₈-alkyl, or C₅- to C₆- cycloalkyl, C₆- to C₂₀- aryl or C₇- to C₁₂- aralkyl, in each case optionally substituted by alkyl and/or halogen,
X denotes a mono- or polynuclear aromatic radical having 6 to 30 C atoms,
n independently of one another is 0 or 1,
N represents values greater than 0 and less than 30,
(v) from 0.01 to 5 parts by weight of a mixture of a polytetrafluoroethylene polymer and a fluorothermoplast, and
(vi) one or more of a stabilizer, a pigment, a dye, a mold release agent, a lubricant, or an antistatic agent,
wherein parts by weight are based on the total weight of the ignition resistant carbonate, polymer composition.

3. The ignition resistant carbonate polymer composition of Claim 1 wherein X is derived from a diol selected from diphenylphenol, bisphenol A, resorcinol, or hydroquinone.

4. The ignition resistant carbonate polymer composition of Claim 1 wherein (v) is a mixture of fibril forming polytetrafluoroethylene polymer and fluorothennoplast present in an amount of from 0.1 to 3 parts by weight based on the total weight of the ignition resistant carbonate polymer composition.

5. The ignition resistant carbonate polymer composition of Claim 4 wherein in component (v) the fluorothermoplast comprises a polymer of interpolymerized units derived from tetrafluoroethylene (TFE) and hexafluoropropylene (HFP), a polymer of interpolymerized units derived from TFE, HFP and vinylidenefluoride (VDF), a polymer of interpolymerized units derived from TFB, HFP and a monomer represented by formula X, or a polymer derived from interpolymerized units derived from TFE and a monomer represented by formula X:
R⁸₂=CR⁸₂ X
wherein each of R⁸ is independently selected from H, Cl, or an alkyl group of from 1 to 8 carbon atoms, a cyclic alkyl group of from 0.5 to 10 carbon atoms, or an aryl group of from 1 to 8 carbon atoms.

6. The ignition resistant carbonate polymer composition of Claim 4 wherein in component (v) the fluorothermoplast comprises a terpolymer having interpolymerized units derived from tetrafluoroethylene (TFE), hexafluoropropylene (HFP) and vinylidenefluoride (VDF).

7. A method for making an ignition resistant carbonate polymer composition comprising the step of melt-compounding:
(i) from 30 to 75 parts by weight of an aromatic polycarbonate or an aromatic polyester carbonate,
(ii) from 5 to 60 parts by weight of a non-silicon-containing graft (co)polymer produced by mass polymerization of
(ii.a) from 5 to 99 percent by weight of a grafting (co)polymer comprising one or more vinyl monomers on
(ii.b) from 95 to 1 percent by weight of one or more a grafting backbone having a glass transition temperature (T_{g}) of less than 10°C,
(iii) from 0.5 to 10 parts by weight of a silicon-containing graft (co)polymer having a core-shell morphology, including a grafted shell that contains polymerized, alkyl(meth)acrylate and a composite rubber core that contains polyoiganosiloaane and poly(meth)alkyl acrylate components, wherein said core comprises at least 20 percent by weight silicons based on the total weight of the silicon-containing graft (co)polymer,
(iv) from 2 to 20 parts by weight of an oligomeric aromatic phosphorous compound represented by the structure: 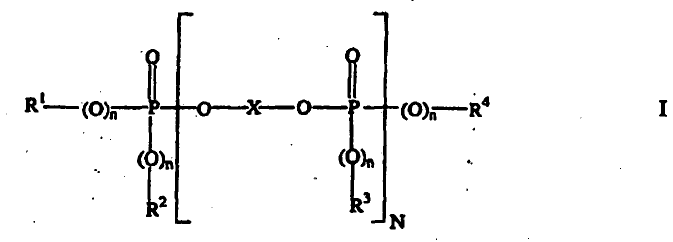 wherein in the formula I,
R¹, R², R³ and R⁴ independently of one another each denote optionally halogenated C₁- to C₄-alkyl, or C₅- to C₆- cycloalkyl, C₆- to C₂₀- aryl or C₇- to C₁₂- aralkyl, in each case optionally substituted by alkyl and/or halogen,
X in the formula I denotes a mono- or polynuclear aromatic radical having 6 to 30 C atoms,
n in the formula I independently of one another can be 0 or 1,
N represents values greater than 0 and less than 30,
(v) from 0.01 to 5 parts by weight of a mixture of a polytetrafluoroethylene polymer and fluorothermoplast, and
(vii) one or more of a filler, a fiber, a stabilizer, a pigment, a mold release, a flow aid, or an antistatic agent,
wherein parts by weight are based on the total weight of the ignition resistant carbonate polymer composition.

8. A formed article comprising the ignition resistant carbonate polymer composition of Claim 1.

9. The formed article of Claim 8 is an interior trim for rail vehicle, an interior and/or exterior automotive article, an enclosure for electrical devices containing small transformers, an enclosure for information dissemination and/or transmission device, an enclosure and/or cladding for medical purposes, a message device and/or enclosures therefore, a toy vehicles for children, a sheet wall element, an enclosure for safety equipment, a hatchback spoiler, a thermally insulated transport container, an apparatus for keeping and/or caring for small animals, an article for sanitary and/or bathroom installations, a cover grill for ventilation openings, an article for summer houses and sheds, enclosures for garden appliances and/or an enclosure for: a power tool, an appliance, a TV, a VCR, a DVD player, a web appliance, an electronic book, a telephone, a computer, a monitor, a fax machine, a battery charger, a scanner, a copier, a printer, a hand held computer, or a flat screen display.

## Patentansprüche

1. Flammbeständige Carbonatpolymerzusammensetzung, umfassend:
(i) ein aromatisches Polycarbonat oder ein aromatisches Polyestercarbonat,
(ii) ein durch Massepolymerisation hergestelltes Pfropf(co)polymer, das kein Silicium enthält,
(iii) ein Silicium enthaltendes Pfropf(co)polymer, das eine Kern-Schale-Morphologie aufweist, einschließend eine gepfropfte Schale, die polymerisiertes Alkyl(meth)acrylat enthält, und einen Kern aus Kompositkautschuk, der Polyorganosiloxan- und Poly(meth)alkylacrylat-Bestandteile enthält, worin der Kern zumindest 20 Gew.% Silicium enthält, basierend auf dem Gesamtgewicht des Silicium enthaltenden Pfropf(co)polymers,
(iv) eine oligomere aromatische Phosphorverbindung, die durch die Formel I dargestellt wird: 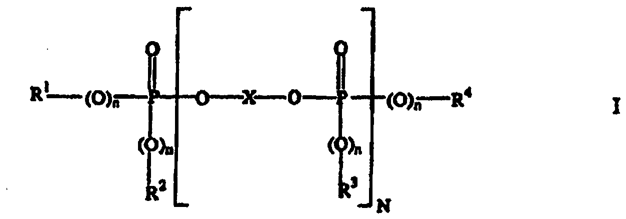 worin
R¹, R², R³ und R⁴ unabhängig voneinander jeweils wahlweise halogeniertes C₁₋₈-Alkyl oder C₅₋₆-Cycloalkyl, C₆₋₂₀-Aryl oder C₇₋₁₂-Aralkyl, die in jedem Fall wahlweise mit Alkyl und/oder Halogen substituiert sind, bezeichnen,
X einen ein- oder mehrkernigen aromatischen Rest, der 6 bis 30 C-Atome aufweist, bezeichnet,
n unabhängig voneinander 0 oder 1 ist,
N Werte größer als 0 und kleiner als 30 darstellt,
(v) eine Mischung von einem Polytetrafluorethylenpolymer und einem Fluorthermoplasten, und
(vi) eines oder mehrere von einem thermoplastischen Vinyl(co)polymer, einem Schlagzähmodifizierer, der verschieden von (iii) ist, einem Füllstoff, einem Verstärkungsmaterial, einem Stabilisierungsmittel, einem Pigment, einem Farbstoff, einem Formtrennmittel, einem Schmiermittel oder einem antistatischen Mittel.

2. Flammbeständige Carbonatpolymerzusammensetzung, bestehend aus:
(i) von 30 bis 75 Gew.-Teilen eines aromatischen Polycarbonats oder eines aromatischen Polyestercarbonats,
(ii) von 5 bis 60 Gew.-Teilen eines Pfropf(co)polymers, das kein Silicium enthält, hergestellt durch Massepolymerisation von
(ii.a) von 5 bis 99 Gew.% eines Pfropf(co)polymers, das ein oder mehrere Vinylmonomere umfasst, auf
(ii.b) von 95 bis 1 Gew.% eines oder mehrerer von einem Pfropfgerüst, das eine Glasübergangstemperatur (T_{g}) von weniger als 10°C aufweist,
worin Gewichtsprozente auf dem Gesamtgewicht des Pfropf(co)polymers basieren,
(iii) von 0,5 bis 10 Gew.-Teilen eines Silicium enthaltenden Pfropf(co)polymers, das eine Kern-Schale-Morphologie aufweist, einschließend eine gepfropfte Schale, die polymerisiertes Alkyl(meth)acrylat enthält, und einen Kern aus Kompositkautschuk, der Polyorganosiloxan- und Poly(meth)alkylacrylat-Bestandteile enthält, worin der Kern zumindest 20 Gew.% Silicium umfasst, basierend auf dem Gesamtgewicht des Silicium enthaltenden Pfropf(co)polymers,
(iv) von 2 bis 20 Gew.-Teilen einer oligomeren aromatischen Phosphorverbindung, die durch die Formel I dargestellt wird: 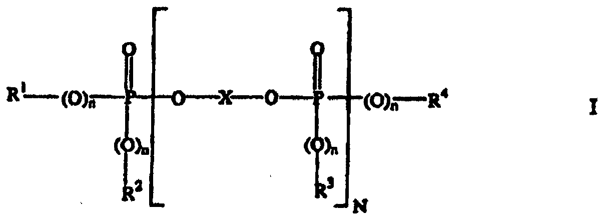 worin in der Formel I
R¹, R², R³ und R⁴ unabhängig voneinander jeweils wahlweise halogeniertes C₁₋₈-Alkyl oder C₅₋₆-Cycloalkyl, C₆₋₂₀-Aryl oder C₇₋₁₂-Aralkyl, die in jedem Fall wahlweise mit Alkyl und/oder Halogen substituiert sind, bezeichnen,
X einen ein- oder mehrkernigen aromatischen Rest, der 6 bis 30 C-Atome aufweist, bezeichnet,
n unabhängig voneinander 0 oder 1 ist,
N Werte größer als 0 und kleiner als 30 darstellt,
(v) von 0,01 bis 5 Gew.-Teilen einer Mischung von einem Polytetrafluorethylenpolymer und einem Fluorthermoplasten, und
(vi) einem oder mehreren von einem Stabilisierungsmittel, einem Pigment, einem Farbstoff, einem Formtrennmittel, einem Schmiermittel oder einem antistatischen Mittel,
worin Gewichtsteile auf dem Gesamtgewicht der flammbeständigen Carbonatpolymerzusammensetzung basiert sind.

3. Flammbeständige Carbonatpolymerzusammensetzung gemäß Anspruch 1, worin X von einem Diol, ausgewählt aus Diphenylphenol, Bisphenol A, Resorcinol oder Hydrochinon, abgeleitet ist.

4. Flammbeständige Carbonatpolymerzusammensetzung gemäß Anspruch 1, worin (v) eine Mischung von einem Fibrillenbildenden Polytetrafluorethylenpolymer und einem Fluorthermoplasten ist, die in einer Menge von 0,1 bis 3 Gew.-Teilen, basierend auf dem Gesamtgewicht der flammbeständigen Carbonatpolymerzusammensetzung, vorliegt.

5. Flammbeständige Carbonatpolymerzusammensetzung gemäß Anspruch 4, worin in Bestandteil (v) der Fluorthermoplast ein Polymer aus zwischenpolymerisierten Einheiten, die von Tetrafluorethylen (TFE) und Hexafluorpropylen (HFP) abgeleitet sind, ein Polymer aus zwischenpolymerisierten Einheiten, die von TFE, HFP und Vinylidenfluorid (VDF) abgeleitet sind, ein Polymer aus zwischenpolymerisierten Einheiten, die von TFE, HFP und einem Monomer, das durch Formel X dargestellt wird, abgeleitet sind, oder ein Polymer, das von zwischenpolymerisierten Einheiten, die von TFE und einem Monomer, das durch Formel X dargestellt wird, abgeleitet sind, umfasst:
R⁸₂C=CR⁸₂ X
worin jedes R⁸ unabhängig aus H, Cl oder einer Alkylgruppe mit von 1 bis 8 Kohlenstoffatomen, einer cyclischen Alkylgruppe mit von 0,5 bis 10 Kohlenstoffatomen oder einer Arylgruppe mit von 1 bis 8 Kohlenstoffatomen ausgewählt ist.

6. Flammbeständige Carbonatpolymerzusammensetzung gemäß Anspruch 4, worin in Bestandteil (v) der Fluorthermoplast ein Terpolymer umfasst, das zwischenpolymerisierte Einheiten aufweist, die von Tetrafluorethylen (TFE), Hexafluorpropylen (HFP) und Vinylidenfluorid (VDF) abgeleitet sind.

7. Verfahren zur Herstellung einer flammbeständigen Carbonatpolymerzusammensetzung, umfassend den Schritt des Schmelzkompoundierens von:
(i) von 30 bis 75 Gew.-Teilen eines aromatischen Polycarbonats oder eines aromatischen Polyestercarbonats,
(ii) von 5 bis 60 Gew.-Teilen eines Pfropf(co)polymers, das kein Silicium enthält, hergestellt durch Massepolymerisation von
(ii.a) von 5 bis 99 Gew.% eines Pfropf(co)polymers, das ein oder mehrere Vinylmonomere umfasst, auf
(ii.b) von 95 bis 1 Gew.% eines oder mehrerer von einem Pfropfgerüst, das eine Glasübergangstemperatur (T_{g}) von weniger als 10°C aufweist,
(iii) von 0,5 bis 10 Gew.-Teilen eines Silicium enthaltenden Pfropf(co)polymers, das eine Kern-Schale-Morphologie aufweist, einschließend eine gepfropfte Schale, die polymerisiertes Alkyl(meth)acrylat enthält, und einen Kern aus Kompositkautschuk, der Polyorganosiloxan und Poly(meth)alkylacrylat-Bestandteile enthält, worin der Kern zumindest 20 Gew.% Silicium umfasst, basierend auf dem Gesamtgewicht des Silicium enthaltenden Pfropf(co)polymers,
(iv) von 2 bis 20 Gew.-Teilen einer oligomeren aromatischen Phosphorverbindung, die durch die Struktur dargestellt wird: 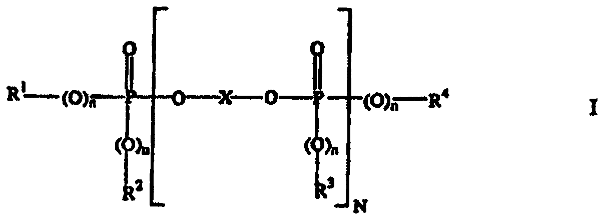 worin in der Formel I
R¹, R², R³ und R⁴ unabhängig voneinander jeweils wahlweise halogeniertes C₁₋₈-Alkyl oder C₅₋₆-Cycloalkyl, C₆₋₂₀-Aryl oder C₇₋₁₂-Aralkyl, die in jedem Fall wahlweise mit Alkyl und/oder Halogen substituiert sind, bezeichnen,
X in der Formel I einen ein- oder mehrkernigen aromatischen Rest, der 6 bis 30 C-Atome aufweist, bezeichnet,
n in der Formel I unabhängig voneinander 0 oder 1 sein kann,
N Werte größer als 0 und kleiner als 30 darstellt,
(v) von 0,01 bis 5 Gew.-Teilen einer Mischung von einem Polytetrafluorethylenpolymer und einem Fluorthermoplasten, und
(vi) einem oder mehreren von einem Füllstoff, einer Faser, einem Stabilisierungsmittel, einem Pigment, einem Formtrennmittel, einem Fliesshilfsmittel oder einem antistatischen Mittel,
worin Gewichtsteile auf dem Gesamtgewicht der flammbeständigen Carbonatpolymerzusammensetzung basiert sind.

8. Formkörper, umfassend die flammbeständige Carbonatpolymerzusammensetzung gemäß Anspruch 1.

9. Formkörper gemäß Anspruch 8, der eine Innenverkleidung eines Schienenfahrzeugs, ein Körper für den Innenraum und/oder Außenraum eines Kraftfahrzeugs, ein Gehäuse für elektrische Vorrichtungen, die kleine Transformatoren enthalten, ein Gehäuse für Informationsverbreitungs- und/oder Übertragungsvorrichtungen, ein Gehäuse und/oder eine Verkleidung für medizinische Zwecke, eine Nachrichtenvorrichtung und/oder Gehäuse davon, ein Spielzeugfahrzeug für Kinder, ein Wandbekleidungselement, ein Gehäuse für Sicherheitsausrüstung, ein Heckklappenspoiler, ein thermisch isoliertes Transportbehältnis, ein Gerät zum Halten und/oder Pflegen von Kleintieren, ein Artikel für Sanitär- und/oder Badinstallationen, ein Abdeckrost für Lüftungsöffnungen, ein Artikel für Sommerhäuser und Hütten, Gehäuse für Gartengeräte und/oder ein Gehäuse für: eine Werkzeugmaschine, eine Appliance, einen TV, einen VCR, einen DVD-Spieler, eine Web-Appliance, ein elektronisches Buch, ein Telefon, einen Computer, einen Monitor, ein Fax-Gerät, ein Batterieladegerät, einen Scanner, einen Kopierer, einen Drucker, einen Laptop oder ein Flachbildschirm ist.

## Revendications

1. Composition de polymère de carbonate résistant à l'inflammation comprenant :
(i) un polycarbonate aromatique ou un carbonate de polyester aromatique,
(ii) un (co)polymère greffé ne contenant pas de silicium produit par polymérisation en masse,
(iii) un (co)polymère greffé contenant du silicium ayant une morphologie noyau-enveloppe, incluant une enveloppe greffée qui contient un (méth)acrylate d'alkyle polymérisé et un noyau de caoutchouc composite qui contient des composants polyorganosiloxane et poly(acrylate de (méth)alkyle), dans laquelle ledit noyau comprend au moins 20 pour cent en poids de silicium sur la base du poids total du (co)polymère greffé contenant du silicium
(iv) un composé phosphoreux aromatique oligomérique représenté par la formule I : 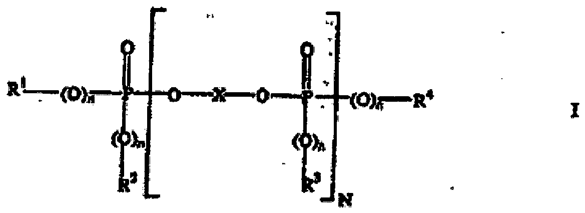 dans laquelle,
R¹, R², R³ et R⁴ dénotent indépendamment les uns des autres un alkyle en C₁-C₈ facultativement halogéné, ou un cycloalkyle en C₅-C₆, un aryle en C₆-C₂₀ ou un aralkyle en C₇-C₁₂, dans chaque cas facultativement substitué par un alkyle et/ou un halogène,
X dénote un radical aromatique mono ou polynucléaire ayant 6 à 30 atomes de C,
n indépendamment les uns des autres est 0 ou 1,
N représente des valeurs supérieures à 0 et inférieures à 30,
(v) un mélange d'un polymère de polytétrafluoroéthylène et d'un thermoplastique fluoré, et
(vi) un ou plusieurs parmi un (co)polymère vinylique thermoplastique, un modificateur de la résistance au choc différent de (iii), une charge, un matériau de renfort, un stabilisant, un pigment, un colorant, un agent de démoulage, un lubrifiant, ou un agent antistatique.

2. Composition de polymère de carbonate résistant à l'inflammation consistant en :
(i) de 30 à 75 parties en poids d'un polycarbonate aromatique ou d'un carbonate de polyester aromatique,
(ii) de 5 à 60 parties en poids d'un (co)polymère greffé ne contenant pas de silicium produit par polymérisation en masse de
(ii.a) de 5 à 99 pour cent en poids d'un (co)polymère de greffage comprenant un ou plusieurs monomère(s) vinylique(s) sur
(ii.b) de 95 à 1 pour cent en poids d'une ou plusieurs chaîne(s) principale(s) de greffage ayant une température de transition vitreuse (T_{g}) de moins de 10°C dans laquelle les pourcentages en poids sont basés sur le poids total du (co)polymère greffé,
(iii) de 0,5 à 10 partie(s) en poids d'un (co)polymère greffé contenant du silicium ayant une morphologie noyau-enveloppe, incluant une enveloppe greffée qui contient un (méth)acrylate d'alkyle polymérisé et un noyau de caoutchouc composite qui contient des composants polyorganosiloxane et poly(acrylate de (méth)alkyle), dans laquelle ledit noyau comprend au moins 20 pour cent en poids de silicium sur la base du poids total du (co)polymère greffé contenant du silicium,
(iv) de 2 à 20 parties en poids d'un composé phosphoreux aromatique oligomérique représenté par la formule I : 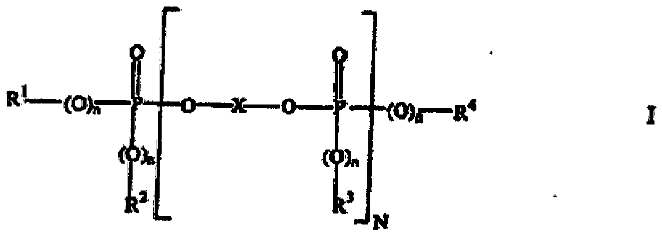 dans laquelle, dans la formule I,
R¹, R², R³ et R⁴ dénotent indépendamment les uns des autres un alkyle en C₁-C₈ facultativement halogéné, ou un cycloalkyle en C₅-C₆, un aryle en C₆-C₂₀ ou un aralkyle en C₇-C₁₂, dans chaque cas facultativement substitué par un alkyle et/ou un halogène,
X dénote un radical aromatique mono ou polynucléaire ayant 6 à 30 atomes de C,
n indépendamment les uns des autres est 0 ou 1,
N représente des valeurs supérieures à 0 et inférieures à 30,
(v) de 0,01 à 5 partie(s) en poids d'un mélange d'un polymère de polytétrafluoroéthylène et d'un thermoplastique fluoré, et
(vi) un ou plusieurs parmi un stabilisant, un pigment, un colorant, un agent de démoulage, un lubrifiant, ou un agent antistatique,
dans laquelle les parties en poids sont basées sur le poids total de la composition de polymère de carbonate résistant à l'inflammation.

3. Composition de polymère de carbonate résistant à l'inflammation selon la revendication 1 dans laquelle X est dérivé d'un diol choisi parmi le diphénylphénol, le bisphénol A, le résorcinol, ou l'hydroquinone.

4. Composition de polymère de carbonate résistant à l'inflammation selon la revendication 1 dans laquelle (v) est un mélange de polymère de polytétrafluoroéthylène formant des fibrilles et d'un thermoplastique fluoré présent dans une quantité de 0,1 à 3 partie(s) en poids sur la base du poids total de la composition de polymère de carbonate résistant à l'inflammation.

5. Composition de polymère de carbonate résistant à l'inflammation selon la revendication 4 dans laquelle, dans le composant (v), le thermoplastique fluoré comprend un polymère d'unités inter-polymérisées dérivées de tétrafluoroéthylène (TFE) et d'hexafluoropropylène (HFP), un polymère d'unités inter-polymérisées dérivées de TFE, de HFP et de fluorure de vinylidène (VDF), un polymère d'unités inter-polymérisées dérivées de TFE, de HFP et d'un monomère représenté par la formule X, ou un polymère d'unités inter-polymérisées dérivées de TFE et d'un monomère représenté par la formule X :
R⁸₂C=CR⁸₂ X
dans laquelle chacun des R⁸ est indépendamment choisi parmi H, Cl, ou un groupe alkyle de 1 à 8 atomes de carbone, un groupe alkyle cyclique de 0,5 à 10 atomes de carbone, ou un groupe aryle de 1 à 8 atomes de carbone.

6. Composition de polymère de carbonate résistant à l'inflammation selon la revendication 4 dans laquelle, dans le composant (v), le thermoplastique fluoré comprend un terpolymère ayant des unités inter-polymérisées dérivées de tétrafluoroéthylène (TFE), d'hexafluoropropylène (HFP) et de fluorure de vinylidène (VDF).

7. Procédé de fabrication d'une composition de polymère de carbonate résistant à l'inflammation comprenant l'étape de mélange à l'état fondu :
(i) de 30 à 75 parties en poids d'un polycarbonate aromatique ou d'un carbonate de polyester aromatique,
(ii) de 5 à 60 parties en poids d'un (co)polymère greffé ne contenant pas de silicium produit par polymérisation en masse de
(ii.a) de 5 à 99 pour cent en poids d'un (co)polymère de greffage comprenant un ou plusieurs monomère(s) vinylique(s) sur
(ii.b) de 95 à 1 pour cent en poids d'une ou plusieurs chaîne(s) principale(s) de greffage ayant une température de transition vitreuse (T_{g}) de moins de 10°C,
(iii) de 0,5 à 10 partie(s) en poids d'un (co)polymère greffé contenant du silicium ayant une morphologie noyau-enveloppe, incluant une enveloppe greffée qui contient un (méth)acrylate d'alkyle polymérisé et un noyau de caoutchouc composite qui contient des composants polyorganosiloxane et poly(acrylate de (méth)alkyle), dans laquelle ledit noyau comprend au moins 20 pour cent en poids de silicium sur la base du poids total du (co)polymère greffé contenant du silicium,
(iv) de 2 à 20 parties en poids d'un composé phosphoreux aromatique oligomérique représenté par la structure : 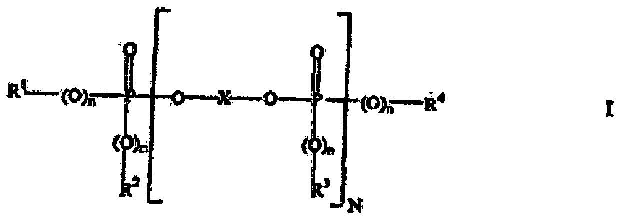 dans laquelle, dans la formule I,
R¹, R², R³ et R⁴ dénotent indépendamment les uns des autres un alkyle en C₁-C₈ facultativement halogéné, ou un cycloalkyle en C₅-C₆, un aryle en C₆-C₂₀ ou un aralkyle en C₇-C₁₂, dans chaque cas facultativement substitué par un alkyle et/ou un halogène,
X dans la formule I dénote un radical aromatique mono ou polynucléaire ayant 6 à 30 atomes de C,
n dans la formule I indépendamment les uns des autres est 0 ou 1,
N représente des valeurs supérieures à 0 et inférieures à 30,
(v) de 0,01 à 5 partie(s) en poids d'un mélange d'un polymère de polytétrafluoroéthylène et d'un thermoplastique fluoré, et
(vii) un ou plusieurs parmi une charge, une fibre, un stabilisant, un pigment, un agent de démoulage, un auxiliaire d'écoulement, ou un agent antistatique,
dans lequel les parties en poids sont basées sur le poids total de la composition de polymère de carbonate résistant à l'inflammation.

8. Article formé comprenant la composition de polymère de carbonate résistant à l'inflammation selon la revendication 1.

9. Article formé selon la revendication 8, qui est une garniture intérieure pour un véhicule de chemin de fer, un article automobile intérieur et/ou extérieur, un boîtier pour des dispositifs électriques contenant de petits transformateurs, un boîtier pour un dispositif de dissémination et/ou de transmission d'informations, un boîtier et/ou un revêtement à usage médical, un dispositif de messagerie et/ou des boîtiers pour celui-ci, des véhicules jouets pour enfants, un élément de paroi en feuille, un boîtier pour un équipement de sécurité, un aileron pour hayon, un conteneur de transport thermiquement isolé, un appareil pour garder et/ou soigner des petits animaux, un article pour des installations sanitaires et/ou de salle de bains, une grille de fermeture pour des ouvertures de ventilation, un article pour des résidences d'été et des cabanons, des boîtiers pour des appareils de jardinage et/ou un boîtier pour : un outil motorisé, un appareil, un téléviseur, un magnétoscope, un lecteur de DVD, un appareil d'accès au web, un livre électronique, un téléphone, un ordinateur, un moniteur, un télécopieur, un chargeur de batterie, un scanneur, un copieur, une imprimante, un ordinateur de poche, ou un afficheur à écran plat.
